# EUROPEAN PATENT SPECIFICATION

(11) **EP 4 088 997 B1**
(45) Date of publication and mention of the grant of the patent: **01.01.2025**
(21) Application number: 21744715.0
(22) Date of filing: 20.01.2021
(51) Int. Cl.: B62M 7/04, F02N 11/04, F02N 15/00, B62K 11/04, B62J 11/19, B62M 23/02, F02N 11/08

(54) **MT TYPE STRADDLED VEHICLE**
GRÄTSCHSITZFAHRZEUG MIT HANDSCHALTUNG
VÉHICULE À SELLE À TRANSMISSION MANUELLE

(30) Priority: 21.01.2020 WO PCT/JP2020/001912
(43) Date of publication of application: 16.11.2022
(73) Proprietor: Yamaha Hatsudoki Kabushiki Kaisha, Iwata-shi, Shizuoka 438-8501 (JP)
(72) Inventor: KATANO, Wataru, Iwata-shi, Shizuoka 438-8501 (JP)
(74) Representative: Stöckeler, Ferdinand
(86) International application number: PCT/JP2021/001814
(87) International publication number: WO 2021/149710

(56) References cited:
- EP-A1- 2 848 510
- EP-A1- 3 536 531
- EP-A2- 3 147 192
- WO-A1-2014/102847
- DE-T5- 112017 007 307
- JP-A- 2005 104 246
- JP-A- 2008 080 986
- JP-A- 2010 195 254
- JP-A- 2017 081 327
- JP-A- 2017 154 676
- JP-A- 2017 208 899
- JP-A- 2019 089 492
- JP-A- 2019 100 248
- JP-A- 2019 152 146
- JP-A- 2019 155 944
- JP-A- 2019 171 995
- JP-A- 2019 183 659
- JP-A- H11 278 343
- US-A1- 2019 276 108

## Description

### Technical Field

The present teaching relates to an MT (manual transmission) type straddled vehicle.

### Background Art

For example, Patent Literature 1 (PTL 1) discloses an MT type straddled vehicle having a manual transmission device. In the MT type straddled vehicle according to PTL 1, various components and frames are disposed in a region higher than a crank case in which a crankshaft and a manual transmission device are stored. More specifically, components such as a starter motor, a canister, a purge device, a fresh air filter, and the like, are disposed higher than the crank case. The canister, the purge device, and the fresh air filter are disposed higher than the starter motor.

JP 2019 100248 A discloses the preamble of claim 1.

EP 3 147 192 A2 discloses a straddle-type vehicle, in which a vehicle control unit may be mounted on a foremost portion of a vehicle body frame. The vehicle control unit is positioned higher than a motor driving unit and further forward than a battery case. Accordingly, the distance from a steering handle to the vehicle control unit is shorter than the distance from the steering handle to the motor driving unit.

### Citation List

### Patent Literature

PTL 1: Japanese Patent Application Laid-Open No. 2012-211553

### Summary of Invention

### Technical Problem

In an MT type straddled vehicle, frames and many components related to engine operations are disposed in a region higher than a crank case. It is desired that the degree of freedom in arranging the frames and components be increased with suppressing degradation of the function of a starter motor. The present teaching aims to provide an MT type straddled vehicle capable of offering an increased degree of freedom in arranging frames and components that are disposed in a region higher than a crank case, with suppressing degradation of the function of a starter motor.

### Solution to the Problem

The inventor of the present teaching studied arrangement of components in a region higher than a crank case. For example, in the vehicle according to PTL 1, the crankshaft and the transmission device are stored in the crank case. This tends to increase the radial size of the crankshaft in the crank case as compared to, for example, storing a continuously variable transmission device, which is provided to an end portion of the crankshaft. Disposed in the region higher than the crank case are the starter motor and a chain tensioner. A thermostat of a cooling system, a throttle valve, and the like may be disposed in the region, too. Thus, arrangement positions of components are restricted in the region, allowing only a small spatial margin.

The inventor of the present teaching further studied arrangement of components in the region higher than the crank case. The inventor of the present teaching focused on the arrangement and function of the starter motor disposed in the region. The starter motor has a function for driving the crankshaft to start an engine. If the starter motor is a multi-phase brushless motor capable of serving as a generator, too, and is provided to one end portion of the crankshaft, it is possible that the starter motor is excluded from the region while maintaining its function. Excluding the starter motor from the region allows other components to be disposed in a space where the starter motor was originally disposed. Consequently, a spatial margin appears in the region higher than the crank case.

In a case where the starter motor is the multi-phase brushless motor serving also as a generator, switching of a current to be supplied to the starter motor is performed by a motor driver. Switching of a current in a case of the starter motor generating electricity is also performed by the motor driver. In the motor driver, therefore, heat is generated in traveling.

The inventor of the present teaching conceived an idea of using a movable space of a front fork in relation to the heat generation in the motor driver. The movable space of the front fork means a space region that the front fork can reach when rotating about a head pipe. Most of the movable space of the front fork except the space occupied by the front fork is vacant. Thus, relative wind in traveling is likely to pass through the movable space. For example, arranging the motor driver farther in the rearward direction than the rear contour of the movable space in close vicinity to the movable space makes it likely that relative wind having passed through the movable space hits the motor driver. Arranging the motor driver farther in the frontward direction than the front contour of the movable space in close vicinity to the movable space makes it likely that relative wind flowing toward the movable space hits the motor driver before passing through the movable space. This easily keeps a state where heat of the motor driver is dissipated by air while the straddled vehicle is traveling, and thus a temperature rise can be suppressed easily. Accordingly, the current switching function of the motor driver is less likely to be hindered. Degradation of the function of the starter motor is suppressed, therefore.

Consequently, it is possible to increase the degree of freedom in arranging components that are disposed in the region higher than the crank case, with suppressing degradation of the function of the starter motor.

To achieve the aim, an aspect of the present teaching provides an MT type straddled vehicle having the following configurations.
(1) An MT type straddled vehicle includes:
   a frame including a head pipe and a main frame;
   a front fork attached to the head pipe, the front fork being configured to swivel about the head pipe and to support a front wheel rotatably;
   a multi-stage transmission device configured to change a gear ratio in multiple stages;
   an engine including a crankshaft, a piston, a cylinder, and a crank case, the crankshaft extending in a left-right direction of the MT type straddled vehicle, the cylinder having a cylinder bore in which the piston is reciprocably accommodated, the crank case being connected to the cylinder and storing the crankshaft and the multi-stage transmission device, the engine being attached to the frame such that the cylinder is in an upward-downward position;
   a starter motor that is a multi-phase brushless motor provided to one end portion of the crankshaft, the starter motor being configured to start the engine by rotating the crankshaft and to serve also as a generator that generates electricity by being driven by the engine; and
   a motor driver connected to the starter motor, and configured to perform switching of a current to be supplied to the starter motor,
   the front fork including:
      a steering shaft supported by and being able to swivel about the head pipe;
      an upper bracket fixed to the steering shaft at a position higher than the head pipe in an up-down direction of the MT type straddled vehicle;
      an under bracket fixed to the steering shaft at a position lower than the head pipe in the up-down direction of the MT type straddled vehicle;
      a right fork fixed to the upper bracket and the under bracket, the right fork being disposed farther right than the steering shaft in the left-right direction of the MT type straddled vehicle; and
      a left fork fixed to the upper bracket and the under bracket, the left fork being disposed farther left than the steering shaft in the left-right direction of the MT type straddled vehicle,
      the starter motor having a function for assisting an engine output, and
      the motor driver being disposed so as to satisfy all of following requirements (A) to (C):
         (A) at least a part of the motor driver is positioned so as to overlap a region that is surrounded by an upper edge of the upper bracket, a right edge of the right fork, a left edge of the left fork, and a lower edge of the under bracket while the MT type straddled vehicle is in an upright state, composed in a view perpendicular to both the left-right direction and a direction parallel to the head pipe;
         (B) at least a part of the motor driver is positioned farther in a backward direction than the center of the front wheel when in the left-right direction view of the MT type straddled vehicle; and
         (C) at least a part of the motor driver is positioned farther front than the frontmost end of the engine in view of the left-right direction of the MT type straddled vehicle.

The MT type straddled vehicle according to (1) includes the frame, the front fork, the multi-stage transmission device, the engine, the starter motor, and the motor driver.

The frame includes the head pipe and the main frame.

The front fork is attached to the head pipe to be able to swivel. The front fork swivels about the head pipe. The front fork supports the front wheel rotatably.

The engine is attached to the frame.

The engine includes the cylinder and the crank case. The cylinder has the cylinder bore in which the piston is reciprocably accommodated. With the engine being attached to the frame such that the cylinder is in an upward-downward position, the center line of the cylinder bore extends in the vertical direction, for example. The crank case, which is connected to the cylinder, stores the crankshaft and the multi-stage transmission device. Along with a reciprocating motion of the piston, the crankshaft rotates. A rotation speed outputted from the engine is changed at a gear ratio in the multi-stage transmission device. The gear ratio is changed in multiple stages in response to a manipulation.

The starter motor starts the engine. The starter motor is provided to the one end portion of the crankshaft of the engine. The starter motor is the multi-phase brushless motor that serves as the generator, too. The engine can be started by the starter motor, and after the engine starts, electricity can be generated by the starter motor.

The motor driver is connected to the starter motor. The motor driver switches a current to be supplied to the starter motor, which is the multi-phase brushless motor.

The front fork includes the steering shaft, the upper bracket, the under bracket, the right fork, and the left fork. The steering shaft is supported by and is able to swivel about the head pipe. The upper bracket is fixed to the steering shaft at a position farther in the upward direction than the head pipe in the up-down direction of the MT type straddled vehicle. The under bracket is fixed to the steering shaft at a position farther in the downward direction than the head pipe in the up-down direction of the MT type straddled vehicle. The right fork is fixed to the upper bracket and the under bracket, the right fork being disposed farther right than the steering shaft in the left-right direction of the MT type straddled vehicle. The left fork is fixed to the upper bracket and the under bracket, the left fork being disposed farther in the leftward direction L than the steering shaft in the left-right direction of the MT type straddled vehicle.

The motor driver is disposed so as to satisfy all of the following requirements (A) to (C) when in the left-right direction view of the MT type straddled vehicle:
(A) at least a part of the motor driver is positioned so as to overlap the region that is surrounded by the upper edge of the upper bracket, the right edge of the right fork, the left edge of the left fork, and the lower edge of the under bracket while the MT type straddled vehicle is in the upright state, composed in a view perpendicular to both the left-right direction and a direction parallel to the head pipe;
(B) at least a part of the motor driver is positioned farther back than the center of the front wheel in view of the left-right direction of the MT type straddled vehicle; and
(C) at least a part of the motor driver is positioned farther front than the frontmost end of the engine in view of the left-right direction of the MT type straddled vehicle.

In the MT type straddled vehicle according to (1), the crank case stores the multi-stage transmission device. In the MT type straddled vehicle according to (1), therefore, the radial size of the crankshaft tends to be larger as compared to a configuration in which, for example, a continuously variable transmission device provided to an end portion of the crankshaft is stored in the crank case. A space higher than the crank case tends to be smaller accordingly. In the MT type straddled vehicle according to (1), on the other hand, the starter motor that is the multi-phase brushless motor is provided to the one end portion of the crankshaft of the engine, and serves also as the generator. Consequently, the MT type straddled vehicle according to (1) can exclude a conventional starter motor that is specialized in an engine start function. Conventionally, a starter motor that is specialized in a start function is normally disposed higher than the crank case in order to drive a crankshaft. In the MT type straddled vehicle according to (1), however, a starter motor can be eliminated from the region higher than the crank case. Accordingly, in the MT type straddled vehicle according to (1), components related to operations of the engine can be arranged by using a space where the starter motor specialized in the start function would conventionally be disposed. The components related to operations of the engine include, for example, a chain tensioner, a thermostat, a throttle valve, and the like.

Switching of a current to be supplied to the starter motor that is the multi-phase brushless motor is performed by the motor driver. Switching of a current in a case of the starter motor generating electricity is also performed by the motor driver. The motor driver generates heat due to the current. The motor driver of the MT type straddled vehicle according to (1) is disposed so as to satisfy all of the above-described requirements (A) to (C).

A movable space of the front fork is a space that the front fork can reach as the front fork swivels. Not all of the movable space of the front fork is occupied by the front fork. Most of the movable space of the front fork except the space occupied by the front fork is vacant. Thus, relative wind in traveling of the MT type straddled vehicle is likely to pass through the movable space. Since the motor driver is disposed so as to satisfy all of the above-described requirements (A) to (C) in view of the left-right direction of the MT type straddled vehicle, the motor driver is likely to receive such relative wind flowing toward or having passed through the movable space. This easily keeps a state where heat of the motor driver is dissipated by air while the straddled vehicle is traveling, and thus a temperature rise can be suppressed easily. Accordingly, the current switching function of the motor driver is less likely to be hindered. Degradation of the function of the starter motor can be suppressed, therefore.

Eliminating the starter motor from the region higher than the crank case as well as arranging the motor driver in the above-described position makes it possible to increase the degree of freedom in arranging components that are disposed in the region higher than the crank case, with suppressing degradation of the function of the starter motor. The region mentioned in (A) is a region that is surrounded by the upper edge (outer edge) of the upper bracket, the lower edge (outer edge) of the under bracket, the right edge (outer edge) of the right fork, and the left edge (outer edge) of the left fork. Instead of the upper edge (outer edge) of the upper bracket, the center line or the lower edge (inner edge) of the upper bracket may be adoptable. Instead of the lower edge (outer edge) of the under bracket, the center line or the upper edge (inner edge) of the under bracket may be adoptable. Instead of the right edge (outer edge) of the right fork, the center line or the left edge (inner edge) of the right fork may be adoptable. Instead of the left edge (outer edge) of the left fork, the center line or the right edge (inner edge) of the left fork may be adoptable. The outer edges, center lines, and inner edges of these four members may be combined as appropriate.

The starter motor has a function for assisting an engine output. The MT type straddled vehicle can suppress a situation where the starter motor has a high temperature, which makes it possible to use the starter motor to assist the engine output, to provide reinforcement to the output.

In an aspect of the present teaching, the MT type straddled vehicle may adopt the following configuration.

(2) The MT type straddled vehicle according to (1) is configured such that
the motor driver is disposed so as to satisfy the following requirements (D) and (E) in addition to the requirements (A) to (C):
(D) at least a part of the motor driver is positioned higher than the uppermost end of the engine in view of the left-right direction of the MT type straddled vehicle; and
(E) at least a part of the motor driver is positioned lower than the uppermost end of the head pipe in view of the left-right direction of the MT type straddled vehicle.

In the MT type straddled vehicle according to (2), the motor driver is disposed so as to satisfy the requirements (D) and (E) in addition to the requirements (A) to (C) in view of the left-right direction of the MT type straddled vehicle. This makes the motor driver likely to receive relative wind flowing toward or having passed through the movable space of the front fork. Accordingly, the MT type straddled vehicle according to (2) can increase the degree of freedom in arranging components that are disposed in the region higher than the crank case, with suppressing degradation of the function of the starter motor.

In an aspect of the present teaching, the MT type straddled vehicle may adopt the following configuration.

(3) The MT type straddled vehicle according to (1) or (2) is configured such that
the motor driver is disposed so as to satisfy a following requirement (F) in addition to the requirements (A) to (C):
(F) at least a part of the motor driver is positioned farther front than an inclined line in view of the left-right direction of the MT type straddled vehicle, the inclined line being parallel to the head pipe and passing through the uppermost point of the front wheel in view of the left-right direction of the MT type straddled vehicle.

The MT type straddled vehicle according to (3) can suppress an influence that heat of the engine has on the motor driver when traveling. It therefore is possible to increase the degree of freedom in arranging components that are disposed in the region higher than the crank case, with further suppressing degradation of the function of the starter motor.

In an aspect of the present teaching, the MT type straddled vehicle may adopt the following configuration.

(4) The MT type straddled vehicle according to any one of (1) to (3) is configured such that
the motor driver is disposed so as to satisfy a following requirement (G) in addition to the requirements (A) to (C):
(G) at least a part of the motor driver is arranged higher than the lower end of the head pipe in the up-down direction in view of the left-right direction of the MT type straddled vehicle.

In the MT type straddled vehicle according to (4), the motor driver is arranged farther in the upward direction than the lower end of the head pipe in the up-down direction in view of the left-right direction of the MT type straddled vehicle. In the MT type straddled vehicle according to (4), therefore, the movable space of the front fork can be used to keep the state where heat of the motor driver is dissipated by air. Accordingly, it is possible to further increase the degree of freedom in arranging components that are disposed in the region higher than the crank case, with suppressing degradation of the function of the starter motor.

In an aspect of the present teaching, the MT type straddled vehicle may adopt the following configuration.

(5) The MT type straddled vehicle according to any one of (1) to (4) further includes:
a seat where a driver of the MT type straddled vehicle is astride; and
a fuel tank attached to the frame, the fuel tank being disposed so as to satisfy all of following requirements (H) to (J) in view of the left-right direction of the MT type straddled vehicle:
   (H) at least a part of the fuel tank is positioned farther back than the lowermost end of the head pipe;
   (I) at least a part of the fuel tank is positioned higher than the uppermost end of the engine; and
   (J) at least a part of the fuel tank is positioned farther front than the frontmost end of the seat.

In the MT type straddled vehicle according to (5), the fuel tank is disposed so as to satisfy all of the above-described requirements (H) to (J). The fuel tank has some width. Protrusion of the motor driver in the left-right direction can be suppressed if the motor driver is disposed so as to satisfy all of the above-described requirements (A) to (C).

In an aspect of the present teaching, the MT type straddled vehicle may adopt the following configuration.

(6) The MT type straddled vehicle according to (5) is configured such that
the fuel tank includes a fuel tank cover that covers the fuel tank, the fuel tank cover defining a space in at least a part of a region between the frame and an inner wall of the fuel tank cover in view of the left-right direction of the MT type straddled vehicle, and
the motor driver is disposed so as to satisfy a following requirement (K) in addition to the requirements (A) to (C):
   (K) at least a part of the motor driver is disposed between the frame and the inner wall of the fuel tank cover in view of the left-right direction of the MT type straddled vehicle.

In the MT type straddled vehicle according to (6), at least a part of the motor driver is disposed between the frame and the inner wall of the fuel tank cover in view of the left-right direction of the MT type straddled vehicle. Accordingly, the MT type straddled vehicle according to (6) can suppress protrusion of the motor driver in the left-right direction.

In an aspect of the present teaching, the MT type straddled vehicle may adopt the following configuration.
(7) The MT type straddled vehicle according to any one of (1) to (6) further includes an electric cable connected to the starter motor, the electric cable extending along the main frame.

With use of the movable space of the front fork, the electric cable extends from the starter motor, which is provided to the one end portion of the crankshaft, to the motor driver, which is in close vicinity to the movable space. The electric cable connecting the multi-phase brushless motor to the motor driver is a bundle of cables corresponding to multi-phases, which is thicker than a communication cable and thus is not easily bent. If, for example, the electric cable is routed over the near outside of a component of the straddled vehicle, the electric cable may be an obstacle to a maintenance operation on the component. The main frame may also be an obstacle to the maintenance operation, if the main frame is arranged over the near outside of a component or in the vicinity of a component. In the MT type straddled vehicle according to (7), the electric cable connecting the starter motor to the driver is preferably disposed along the main frame. This can suppress a situation where the electric cable becomes an obstacle to a component of the straddled vehicle in terms of maintenance. Eliminating the starter motor from the region higher than the crank case as well as arranging the motor driver in the above-described position increases the degree of freedom in arranging components that are disposed in the region higher than the crank case, with suppressing degradation of the function of the starter motor.

In an aspect of the present teaching, the MT type straddled vehicle may adopt the following configuration.

(8) The MT type straddled vehicle according to (7) is configured such that
the starter motor is provided with a motor lead-out part through which the electric cable connected to the motor driver is led out from the starter motor, and the motor lead-out part is arranged such that the electric cable to be led out through the motor lead-out part extends in a direction toward the frame in view of the left-right direction.

The electric cable, which is thick, is not easily bent, and therefore its direction is less likely to change. In the MT type straddled vehicle according to (8), the motor lead-out part is arranged so as to make the electric cable extend in the direction toward the frame. In the MT type straddled vehicle according to (8), therefore, the electric cable approaches the frame without being bent, and thus without a change of its direction. In addition, the MT type straddled vehicle according to (8) can avoid a situation where the electric cable extending from the motor lead-out part of the starter motor is bent on the way. Accordingly, in the MT type straddled vehicle according to (8), the electric cable connecting the starter motor to the driver can be routed along the main frame. This can consequently suppress a situation where the electric cable becomes an obstacle to a component of the straddled vehicle in terms of maintenance. Eliminating the starter motor from the region higher than the crank case as well as arranging the motor driver in the above-described position makes it possible to increase the degree of freedom in arranging components that are disposed in the region higher than the crank case, with suppressing degradation of the function of the starter motor.

In an aspect of the present teaching, the MT type straddled vehicle may adopt the following configuration.

(9) The MT type straddled vehicle according to (8) is configured such that
the motor lead-out part is arranged such that the electric cable to be led out through the motor lead-out part extends backward.

In the MT type straddled vehicle according to (9), the motor lead-out part of the starter motor can be protected from stones, water, and the like.

In an aspect of the present teaching, the MT type straddled vehicle may adopt the following configuration.

(10) The MT type straddled vehicle according to (8) or (9) is configured such that
the motor lead-out part is arranged such that the electric cable to be led out through the motor lead-out part extends upward.

In the MT type straddled vehicle according to (10), the electric cable to be led out through the motor lead-out part extends in the upward direction toward the motor driver disposed higher than the crank case. Accordingly, it is possible that the electric cable needs to be bent only to a small extent.

In an aspect of the present teaching, the MT type straddled vehicle may adopt the following configuration.

(11) The MT type straddled vehicle according to any one of (8) to (10) is configured such that
the motor driver is provided with a driver lead-out part through which the electric cable connected to the starter motor is led out from the motor driver, and the driver lead-out part is arranged such that the electric cable to be led out through the driver lead-out part extends downward.

The MT type straddled vehicle according to (11) can suppress infiltration of liquid into the motor driver.

In an aspect of the present teaching, the MT type straddled vehicle may adopt the following configuration.

(12) The MT type straddled vehicle according to any one of (8) to (11) is configured such that
the motor lead-out part of the starter motor has a grommet through which the electric cable passes.

In the MT type straddled vehicle according to (12), the motor lead-out part has a high waterproofness thanks to the grommet through which the electric cable passes.

In an aspect of the present teaching, the MT type straddled vehicle may adopt the following configuration.

(13) The MT type straddled vehicle according to (11) is configured such that
the driver lead-out part of the motor driver has a grommet through which the electric cable passes.

In the MT type straddled vehicle according to (13), at least one of the driver lead-out part has a high waterproofness thanks to the grommet through which the electric cable passes.

In an aspect of the present teaching, the MT type straddled vehicle may adopt the following configuration.

(14) The MT type straddled vehicle according to any one of (8) to (13) is configured such that
the electric cable is clamped to the frame.

In the MT type straddled vehicle according to (14), the electric cable is clamped to the frame. Thus, in the MT type straddled vehicle according to (14), it is possible that the electric cable is arranged so as to avoid obstructing components of the MT type straddled vehicle. As a result, the degree of freedom in arranging the other components can be increased.

In an aspect of the present teaching, the MT type straddled vehicle may adopt the following configuration.

(15) The MT type straddled vehicle according to any one of (8) to (14) is configured such that
the electric cable has a core made of a conductor, a coating enveloping the core, and a tube covering the coating.

In the MT type straddled vehicle according to (15), it is possible to easily check any damage to the electric cable by inspecting damage to the tube. Accordingly, the MT type straddled vehicle according to (15) can improve the maintainability.

In an aspect of the present teaching, the MT type straddled vehicle may adopt the following configuration.

(16) The MT type straddled vehicle according to (15) is configured such that
the coating is made of a material with an achromatic color, while the tube is made of a material with a chromatic color.

The MT type straddled vehicle according to (16) can enhance the noticeability of the motor driver relative to the electric cable, to make it easy to check a damage. In addition, the coating having an achromatic color is covered with the tube having a chromatic color, which gives a high noticeability to a damage to the tube. The MT type straddled vehicle according to (16), therefore, allows an operation of, for example, replacing a component disposed near the electric cable to be performed without any contact or damage to the electric cable. Accordingly, the maintainability can be improved.

In an aspect of the present teaching, the MT type straddled vehicle may adopt the following configuration.

(17) The MT type straddled vehicle according to any one of (1) to (16) is configured such that
the motor driver is disposed so as to satisfy a following requirement (L) in addition to the requirements (A) to (C):
(L) at least a part of the motor driver is positioned lower than the upper edge of the frame in view of the left-right direction of the MT type straddled vehicle.

In the MT type straddled vehicle according to (17), the motor driver is arranged lower than the upper edge of the frame. In the MT type straddled vehicle according to (17), therefore, the motor driver is likely to receive relative wind having passed through the movable space or the vicinity thereof, so that degradation of the function of the starter motor can be suppressed more effectively.

In an aspect of the present teaching, the MT type straddled vehicle may adopt the following configuration.

(18) The MT type straddled vehicle according to any one of (1) to (17) is configured such that
the motor driver has a hexahedral shape so as to include two smallest surfaces, two second smallest surfaces, and two largest surfaces, and is arranged with at least a part of one of the largest surfaces opposing the frame.

In the MT type straddled vehicle according to (18), the motor driver has a flat hexahedral shape. Accordingly, arranging the motor driver with its largest surface facing the frame can improve the space efficiency in the MT type straddled vehicle according to (18).

(19) The MT type straddled vehicle according to any one of (1) to (18) is configured such that
the starter motor includes a stator and a rotor, the stator including a stator core and windings of plural phases, the stator core having plural teeth circumferentially arranged such that the plural teeth and slots locate alternately, the windings being wound on the teeth, the rotor including a permanent magnet part with magnetic pole faces, the magnetic pole faces being disposed side by side in the circumferential direction so as to oppose the stator with a gap therebetween, the number of the magnetic pole faces being greater than 2/3 of the number of the slots.

In the MT type straddled vehicle according to (19), the starter motor is configured such that the ratio of the number of magnetic pole faces to the number of slots is greater than 2/3. This can suppress a temperature rise of the stator winding at a time of high rotation while the starter motor is operating as the generator. The MT type straddled vehicle according to (19), therefore, can suppress heat generation by the starter motor and by the motor driver, and thus can suppress a situation where peripheral components are influenced by heat. Accordingly, the MT type straddled vehicle according to (19) increases the degree of freedom in arranging components higher than the crank case. Consequently, more downsizing of the MT type straddled vehicle according to (19) can be enabled. The ratio of the number of magnetic pole faces to the number of slots that can satisfy the relationship of "the number of the magnetic pole faces being greater than 2/3 of the number of the slots" may be, for example, 10:12, 8:9, 4:3, or the like, though the ratio is not limited to these examples. The number of magnetic pole faces is preferably equal to or greater than 8/9 of the number of slots, and more preferably greater than 8/9. The number of magnetic pole faces is still more preferably equal to or greater than the number of slots. The number of magnetic pole faces is even more preferably greater than the number of slots. The number of magnetic pole faces is further preferably 4/3 of the number of slots. The upper threshold of the ratio is, though not particularly limited, 4/3 for instance.

In an aspect of the present teaching, the MT type straddled vehicle may adopt the following configuration.

(20) The MT type straddled vehicle according to (19) is configured such that
the crank case is configured such that the inside thereof is lubricated with oil, and
the starter motor includes a rotor without a fan or a fin that produces an air stream for cooling, the starter motor being positioned so as to be in contact with the oil.

The MT type straddled vehicle according to (20) satisfies a condition that the ratio of the number of magnetic pole faces to the number of slots in the starter motor be greater than 2/3. It therefore is unlikely or less likely that the temperature of the stator windings exceeds the temperature of the low-viscosity oil. This allows the starter motor to dissipate heat by the oil. Accordingly, the MT type straddled vehicle according to (20) can suppress or avoid a size increase of a cooling mechanism for cooling the starter motor.

In an aspect of the present teaching, the MT type straddled vehicle may adopt the following configuration.

(21) The MT type straddled vehicle according to (19) is configured such that
the starter motor is configured such that:
a cooling air inlet and a cooling air outlet are provided; and
the rotor is provided with a fan or a fin that produces an air stream for cooling, the air stream flowing from the cooling air inlet toward the cooling air outlet.

The MT type straddled vehicle according to (21) includes the starter motor of forced air-cooling type. The forced air-cooling type allows an outlet of cooling air to be apart from a component that requires a thermal protection. Accordingly, the MT type straddled vehicle according to (21) allows the motor driver for the starter motor to be apart from the cooling air outlet of the starter motor.

In an aspect of the present teaching, the MT type straddled vehicle may adopt the following configuration.

(22) The MT type straddled vehicle according to any one of (19) to (21) is configured such that
the starter motor is a motor of outer rotor type, and
the rotor has a bottomed cylinder shape connected to the crankshaft at a location between the stator and the cylinder in the left-right direction.

In the MT type straddled vehicle according to (22), the rotor of the starter motor is disposed closer to the center in the left-right direction than the stator. The MT type straddled vehicle according to (22), therefore, allows the stator of the starter motor to be disposed on a crank case cover of the engine. Accordingly, the MT type straddled vehicle according to (22) allows the starter motor to dissipate heat easily.

In an aspect of the present teaching, the MT type straddled vehicle may adopt the following configuration.

(23) The MT type straddled vehicle according to any one of (1) to (22) is configured such that
the starter motor has a rotor position detection device that is a pickup coil.

The MT type straddled vehicle according to (23), in which the rotor position detection device of the starter motor is the pickup coil, enables a rotor position to be detected accurately even when the starter motor has a high temperature.

In an aspect of the present teaching, the MT type straddled vehicle may adopt the following configuration.

(24) The MT type straddled vehicle according to any one of (1) to (23) is configured such that
the engine is any one of a single cylinder engine, a parallel multi-cylinder engine, or a V type multi-cylinder engine.

In the MT type straddled vehicle according to (24), a canister can be arranged in the region higher than the crank case in view of the left-right direction, irrespective of the number of cylinders of the engine. Accordingly, the MT type straddled vehicle according to (24) can offer an increased degree of freedom in layout of components arranged in the region higher than the crank case, irrespective of the number of cylinders of the engine.

The terminology used herein is for defining particular embodiments only and is not intended to limit the teaching. As used herein, the term "and/or" includes any and all combinations of one or more of the associated listed items. As used herein, the terms "including", "comprising", or "having", and variations thereof specify the presence of stated features, steps, operations, elements, components, and/or equivalents thereof, and can include one or more of steps, operations, elements, components, and/or their groups. As used herein, the terms "attached", "connected", "coupled", and/or equivalents thereof are used in a broad sense, and include both of direct and indirect attachment, connection and coupling. The terms "connected" and "coupled" are not limited to physical or mechanical connection or coupling, and can include direct and indirect electrical connection and coupling. Unless otherwise defined, all terms (including technical and scientific terms) used herein have the same meaning as commonly understood by a person skilled in the art to which the present teaching belongs. It will be further understood that terms, such as those defined in commonly used dictionaries, should be interpreted as having a meaning that is consistent with their meaning in the context of the present teaching and relevant art and should not be interpreted in an idealized or overly formal sense unless expressly so defined herein. It will be understood that the description of the present teaching discloses multiple techniques and steps. Each of these has individual benefit and each can also be used in conjunction with one or more, or in some cases all, of the other disclosed techniques. Accordingly, for the sake of clarity, this description will refrain from repeating every possible combination of the individual steps in an unnecessary fashion.

The description will give an explanation about a novel MT type straddled vehicle. In the description given below, for the purposes of explanation, numerous specific details are set forth in order to provide a thorough understanding of the present teaching. It will be apparent, however, that those skilled in the art may practice the present teaching without these specific details. The present disclosure is to be considered as an exemplification of the present teaching, and is not intended to limit the present teaching to the specific embodiments illustrated by drawings or descriptions below.

The MT type straddled vehicle is a straddled vehicle including a manual multi-stage transmission device. The straddled vehicle refers to a vehicle including a saddle on which a driver can sit astride. Examples of the straddled vehicle encompass a moped motorcycle, an offroad motorcycle, and an onroad motorcycle. The straddled vehicle is not limited to the motorcycle. Alternatively, for example, the straddled vehicle may be a three-wheeled motor vehicle or an all-terrain vehicle (ATV). The three-wheeled motor vehicle may include one front wheel and two rear wheels. A rear wheel or a front wheel may function as a driving wheel. Alternatively, both of the rear wheel and the front wheel may function as a driving wheel. The straddled vehicle is preferably configured to be capable of making a turn in a leaning posture. The straddled vehicle configured to be capable of making a turn in a leaning posture can make a turn while leaning toward the center of a curve. With this, the straddled vehicle configured to be capable of making a turn in a leaning posture can resist against a centrifugal force acting on the vehicle during a turn. Since the straddled vehicle configured to be capable of making a turn in a leaning posture is required to have agility, the running response to a manipulation for starting is considered important. For example, the straddled vehicle configured to be capable of making a turn in a leaning posture does not include a torque converter in a drive power transmission path from the drive source to the driving wheel, the torque converter being configured to work while making use of a dynamic fluid action.

The frame constitutes a framework of the MT type straddled vehicle. The frame supports components mounted on the straddled vehicle, such as an engine, a seat, a fuel tank, a battery, and the like. For example, the frame includes at least the main frame. The frame includes the head pipe and the main frame fixed to the head pipe, for example. The frame may be composed of the head pipe, the main frame, and other components, or may be composed of components different from the head pipe and the main frame. For example, the head pipe supports the front fork so as to enable the front fork to swivel, which supports the front wheel. The main frame may be composed of either a single pipe or a combination of plural pipes, for example. The main frame may be composed of a structure different from a pipe, such as a plate or the like. Non-limiting examples of the frame include a single cradle type frame, a double cradle type frame, a diamond type frame, a monocoque type frame, and the like. The frame, for example, bears loads from the front wheel and the rear wheel.

Examples of the engine include a single cylinder engine and an engine with two or more cylinders. Operations of the engine mean that the engine produces power by gas combustion, and outputs the power in the form of a torque and a rotation speed of the crankshaft. The engine is a four-stroke engine having a high-load region and a low-load region during four strokes, for example. The four-stroke engine having a high-load region and a low-load region during four strokes is, for example, a single cylinder engine, a two-cylinder engine, a three-cylinder engine of unequal interval explosion type, or a four cylinder engine of unequal interval explosion type. The four-stroke engine having a high-load region and a low-load region during four strokes has a greater rotation fluctuation at a low engine rotation speed, as compared to other types of engines. The engine, however, may be a four-stroke engine not having a high-load region and a low-load region during four strokes, for example. The high-load region means a region in one combustion cycle of the engine, where a load torque is higher than an average value of load torques over the one combustion cycle. The low-load region means a region corresponding to one combustion cycle except the high-load region. In the engine, for example, the low-load region is wider than the high-load region in terms of the rotation angle of the crankshaft. The compression stroke overlaps the high-load region.

The crankshaft direction is the same as the left-right direction of the MT type straddled vehicle.

The wording "the cylinder is in an upward-downward position" means that the cylinder is set such that the cylinder is oriented upward while the MT type straddled vehicle is in the upright state. In a case of the engine including two or more cylinders, it suffices that at least one of the cylinders is in the upward-downward position. To refer to the position of a site in the engine, the position of the cylinder being in the upward-downward position can be referred to. Here, the wording "oriented upward" means a situation where the cylinder extends upward from the rotation shaft of the engine in the up-down direction of the MT type straddled vehicle, while the central axis of its cylinder bore is inclined relative to the vertical line at an inclination angle equal to or less than a specified angle. The specified angle may be 45 degrees or 30 degrees, for example. The inclination angle is defined on the basis of a plane including both the central axis and the vertical line.

The multi-phase brushless motor is a motor having no commutator. The multi-phase brushless motor may be either of outer rotor type or of inner rotor type, for example. The multi-phase brushless motor may be of axial gap type instead of radial gap type. The multi-phase brushless motor functions as the starter motor for starting the engine, for example. The starter motor is the generator that generates electricity by being driven by the engine or the driving wheel, for example. The starter motor is further an electric motor that assists an output of the engine.

The starter motor is connected with plural electric cables such as a cable through which electricity is to be supplied from the motor driver, or through which electricity is to be supplied to the motor driver. Arrangement of a portion where the electric cable connects to the starter motor so as to make the electric cable extend from the starter motor in the direction toward the frame when in the left-right direction view indicates, for example, the following situation: in view of the left-right direction, the connecting portion where the electric cable connects to the starter motor is disposed within a range from -45 degrees to +45 degrees from the center point of the starter motor relative to a straight line defined by the shortest distance from the center point of the starter motor to the frame.

The multi-stage transmission device is configured to change the gear ratio in multiple stages in response to a manipulation on the shift pedal, for example. A continuously variable transmission device does not correspond to the multi-stage transmission device.

The motor driver has a function for performing switching of electricity supplied from the battery to the starter motor as well as electricity supplied from the starter motor to the battery. The motor driver may be integrated with a control device. The control device is an engine control unit (ECU), for example. The control device may include a processor that executes programs, or may be an electronic circuit. It however is just required that the motor driver has a function for performing switching of a current that flows between the battery and the multi-phase brushless motor. The motor driver may be disposed at a position distant from the processor, for example.

The left-right direction of the MT type straddled vehicle is a direction that is at right angles to a front-back direction of the MT type straddled vehicle.

### Advantageous Effects of the Invention

The MT type straddled vehicle according to the present teaching makes it possible to increase the degree of freedom in arranging a frame and components that are disposed in a region higher than a crank case, with suppressing degradation of the function of the starter motor.

### Brief Description of the Drawings

[FIG. 1] Front and left side views for illustration of an MT type straddled vehicle according to an embodiment of the present teaching.
[FIG. 2] Views of the straddled vehicle shown in FIG. 1.
[FIG. 3] A left side view showing on an enlarged scale an engine unit of the straddled vehicle shown in FIG. 1
[FIG. 4] A cross-sectional view showing on an enlarged scale the engine unit of the straddled vehicle shown in FIG. 1.
[FIG. 5] An illustrative diagram schematically showing the relationship between the required torque and the crank angle position of an engine of the straddled vehicle shown in FIG. 1.
[FIG. 6] A cross-sectional view showing a cross-section perpendicular to the rotation axis of a multi-phase brushless motor of the straddled vehicle shown in FIG. 1.
[FIG. 7] A left side view showing on an enlarged scale an engine unit of a straddled vehicle including a starter motor that is specialized in a start function, as a comparative example to the straddled vehicle shown in FIG. 1.
[FIG. 8] A diagram illustrating an example of a surrounded region X shown in FIG. 3.
[FIG. 9] A left side view showing on an enlarged scale a frame as well as the engine unit of the straddled vehicle shown in FIG. 1.
[FIG. 10] A left side view showing on an enlarged scale an example of how a motor driver 70 is arranged in the straddled vehicle 1 shown in FIG. 1.
[FIG. 11] A block diagram outlining an electrical configuration of the engine unit of the straddled vehicle shown in FIG. 1.

### Description of Embodiments

### [Overview]

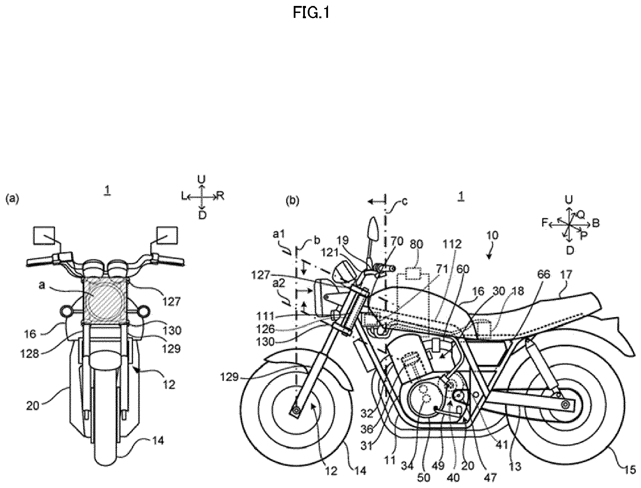

FIG. 1 is shown for illustration of an MT type straddled vehicle (straddled vehicle 1) according to an embodiment of the present teaching. FIG. 1(a) is a front view of the straddled vehicle 1, and FIG. 1(b) is a left side view of the straddled vehicle 1.

In the Description and Drawings of the present application, F represents the frontward direction of a straddled vehicle 1. B represents the backward (rearward) direction of the straddled vehicle 1. FB represents the front-back direction of the straddled vehicle 1. U represents the upward (upper) direction of the straddled vehicle 1. D represents the downward (lower) direction of the straddled vehicle 1. UD represents the up-down direction of the straddled vehicle 1. L represents the left direction of the straddled vehicle 1. R represents the right direction of the straddled vehicle 1. LR represents the left-right direction of the straddled vehicle 1. LR is equal to the vehicle width direction of the straddled vehicle 1. That is, the vehicle width direction LR of the straddled vehicle 1 includes both of the rightward direction R and the leftward direction L in the straddled vehicle 1. The above-mentioned directions are the same as the corresponding directions of an engine unit 20 mounted on the straddled vehicle 1. Q represents a direction parallel to a head pipe. P represents a direction perpendicular to both the direction Q and the left-right direction LR.

The straddled vehicle 1 shown in FIG. 1(a) and (b) is an MT (manual transmission) type straddled vehicle including a manual type multi-stage transmission device. Hereinafter in the Description of the present application, the MT type straddled vehicle according to the embodiment will be simply referred to as the straddled vehicle 1. The straddled vehicle 1 includes a vehicle body 10 and the engine unit 20. The vehicle body 10 includes a frame 11, a front fork 12, a rear arm 13, a front wheel 14, and a rear wheel 15.

The frame 11 constitutes a framework of the straddled vehicle 1. The frame 11 includes a head pipe 111 and a main frame 112. The front fork 12 is attached to the head pipe 111, is configured to swivel about the head pipe 111, and rotatably supports the front wheel 14. A handlebar 121 is fixed to the upper end of the front fork 12 in the up-down direction UD of the straddled vehicle 1. The handlebar 121 functions as a steering handle. The rear arm 13 is swingably attached to the frame 11, and rotatably supports the rear wheel 15.

The front fork 12 includes a steering shaft 126, an upper bracket 127, an under bracket 130, a right fork 128, and a left fork 129. The steering shaft 126 is supported by and is able to swivel about the head pipe 111. The upper bracket 127 is fixed to the steering shaft 126 at a position farther in the upward direction U than the head pipe 111 in the up-down direction UD of the straddled vehicle 1. The under bracket 130 is fixed to the steering shaft 126 at a position farther in the downward direction D than the head pipe 111 in the up-down direction UD of the straddled vehicle 1. The right fork 128, which is disposed farther in the rightward direction R than the steering shaft 126 in the left-right direction LR of the straddled vehicle 1, is fixed to the upper bracket 127 and the under bracket 130. The left fork 129, which is disposed farther in the leftward direction L than the steering shaft 126 in the left-right direction LR of the straddled vehicle 1, is fixed to the upper bracket 127 and the under bracket 130.

The straddled vehicle 1 includes a fuel tank 16. The fuel tank 16 reserves a fuel to be supplied to an engine 30 (described later). The fuel tank 16 supplies the fuel to the engine 30. The fuel tank 16 is attached to the frame 11. The straddled vehicle 1 includes a seat 17. The seat 17 is attached to the frame 11.

The straddled vehicle 1 includes a battery 18.

The engine unit 20 includes the engine 30, a manual transmission 40, a multi-phase brushless motor (starter generator) 50, an intake system 60, and a side cover 66. That is, the straddled vehicle 1 includes the engine 30, the manual transmission 40, the multi-phase brushless motor 50, and the intake system 60.

The engine 30 includes a cylinder 32, a piston 36, a crank case 31, and a crankshaft 34. The cylinder 32 has a cylinder bore in which the piston 36 is reciprocably accommodated. The crankshaft 34 and the manual transmission 40 are stored in the crank case 31. The crank case 31 is connected to the cylinder 32. The engine 30 is attached to the frame 11. The engine 30 is attached to the frame 11 such that the cylinder 32 is in an upward-downward position. The cylinder being in the upward-downward position means that the center line of the cylinder bore extends in the vertical direction. The engine 30 generates power by its combustion operation, and outputs the power via forward rotation of the crankshaft 34.

The manual transmission 40 is a manual type multi-stage transmission device. The manual transmission 40 is disposed in a power transmission path between the engine 30 and the rear wheel 15. The manual transmission 40 changes a gear ratio in multiple stages in response to a manipulation by a driver of the straddled vehicle 1. The driver of the straddled vehicle 1 manipulates a shift pedal 49, to change the gear ratio of the manual transmission. Specifically, in response to a manipulation by the driver of the straddled vehicle 1, the manual transmission 40 changes the rotation speed of the engine 30, and transmits a resulting speed to the rear wheel 15 serving as a driving wheel. The manual transmission 40 has a neutral state and plural non-neutral states.

The manual transmission 40 includes a manual clutch 41 and an output unit 47. The manual clutch 41 is disposed in the power transmission path between the engine 30 and the manual transmission 40. The manual clutch 41 is operated by a manual clutch lever 19 in response to a manipulation that the driver of the straddled vehicle 1 performs on the manual clutch lever 19. The driver of the straddled vehicle 1, via the manual clutch 41, connects and disconnects power transmission between the engine 30 and the manual transmission 40.

The multi-phase brushless motor 50 is a permanent-magnet type motor. The multi-phase brushless motor 50 is provided to one end portion of the crankshaft 34. The multi-phase brushless motor 50 functions as a starter motor that starts the engine 30 by driving the crankshaft 34 at a time of starting the engine 30. The multi-phase brushless motor 50 is provided so as to operate in conjunction with the crankshaft 34. The multi-phase brushless motor 50 is supplied with electricity from the battery 18, to drive the crankshaft 34. The multi-phase brushless motor 50 also serves as a generator that generates electricity by being driven by the engine 30 at a time of the combustion operation of the engine 30.

The crank case 31 of the straddled vehicle 1 has the manual transmission 40 stored therein. This tends to increase the radial size of the crankshaft 34 as compared to a configuration in which, for example, a continuously variable transmission device provided to an end portion of a crankshaft is stored in the crank case 31 of the straddled vehicle 1. A space higher than the crank case 31 tends to be narrowed accordingly. A starter motor specialized in a start function is normally disposed higher than a crank case in order to drive a crankshaft. In the embodiment, the engine unit 20 has the multi-phase brushless motor 50 serving as both the starter motor and the generator, and therefore a dedicated starter motor separate from the generator can be eliminated from a region farther in the upward direction U than the crank case 31. Consequently, in the straddled vehicle 1, components related to operations of the engine 30 can be arranged by using a space where the starter motor specialized in the start function would conventionally be disposed. The components related to operations of the engine 30 include, for example, a chain tensioner, a thermostat, a throttle valve, and the like.

In the straddled vehicle 1, moreover, the space where the starter motor specialized in the start function would conventionally be disposed can be used to arrange the intake system 60. The intake system 60 lets air pass to be led in by the engine 30. The intake system 60 is a general term for components that protrude from the cylinder 32 of the engine 30.

The straddled vehicle 1 includes a motor driver 70. The motor driver 70 performs switching of a current to be supplied to the multi-phase brushless motor 50, and a current in a case where the multi-phase brushless motor 50 generates electricity. The motor driver 70 includes an inverter 71. The inverter 71 performs switching of a current flowing between the battery 18 and the multi-phase brushless motor 50. The inverter 71 that performs switching of the current causes the motor driver to generate heat.

The motor driver 70 is disposed so as to satisfy all of the following requirements (A) to (C). The requirements (A) to (C) are as follows:
(A) At least a part of the motor driver 70 is positioned so as to overlap a region (the hatched region a in FIG. 1(a)) that is surrounded by the upper edge of the upper bracket 127, the right edge of the right fork 128, the left edge of the left fork 129, and the lower edge of the under bracket 130 (in a region farther in the downward direction D than the alternate long and short dash line a1 in FIG. 1(b), and farther in the upward direction U than the alternate long and short dash line a2 in FIG. 1(b)) while the straddled vehicle 1 is in an upright state, composed in a view perpendicular to both the left-right direction LR and the direction Q parallel to the head pipe 111;
(B) at least a part of the motor driver 70 is positioned farther in the backward direction B than the center of the front wheel 14 (in a region farther in the backward direction B than the alternate long and short dash line b in FIG. 1(b)); and
(C) at least a part of the motor driver 70 is positioned farther in the frontward direction F than the frontmost end of the engine 30 (in a region farther in the frontward direction F than the alternate long and short dash line c in FIG. 1(b)).

Arranging the motor driver 70 so as to satisfy the requirement (A) makes it possible that the motor driver 70 is arranged in a space around the head pipe 111 of the frame 11 of the straddled vehicle 1. Consequently, the space around the head pipe 111 of the frame 11 of the straddled vehicle 1 can be used to arrange the motor driver 70.

Arranging the motor driver 70 so as to satisfy the requirement (B) makes it possible that the motor driver 70 is arranged so as not to protrude frontward (F) in the front-back direction FB of the straddled vehicle 1.

Arranging the motor driver 70 so as to satisfy the requirement (C) makes it possible that the motor driver 70 is arranged so as to avoid overlapping the engine when in the left-right direction view LR of the straddled vehicle 1. In addition, arranging the motor driver 70 so as to satisfy the requirement (C) makes it possible that the motor driver 70 is arranged farther frontward (F) in the front-back direction FB than the engine 30 in view of the left-right direction LR of the straddled vehicle 1. Consequently, the space around the head pipe 111 of the frame 11 of the straddled vehicle 1 can be used to arrange the motor driver 70.

A movable space of the front fork 12, which is in the space around the head pipe 111, is a space that the front fork 12 can reach as the front fork 12 swivels. Not the entire movable space of the front fork 12 is occupied by the front fork 12. Most of the movable space of the front fork 12 except the space occupied by the front fork 12 is vacant. Thus, relative wind in traveling of the straddled vehicle 1 is likely to pass through the movable space, in the space around the head pipe 111 including the movable space of the front fork 12. Since the motor driver 70 is disposed so as to satisfy all of the above-mentioned requirements (A) to (C) in view of the left-right direction LR of the straddled vehicle 1, the motor driver 70 is likely to receive relative wind flowing toward the space around the head pipe 111 or relative wind having passed through the space around the head pipe 111. This easily keeps a state where heat of the motor driver 70 is dissipated by air while the straddled vehicle 1 is traveling, and thus a temperature rise can be suppressed easily. Accordingly, the current switching function of the motor driver 70 is less likely to be hindered. Degradation of the function of the multi-phase brushless motor 50 is suppressed, therefore.

Eliminating the starter motor from the region higher than the crank case as well as arranging the motor driver in the above-described position makes it possible to increase the degree of freedom in arranging components that are disposed in the region higher than the crank case, with suppressing degradation of the function of the starter motor.

The straddled vehicle 1 includes a control device 80. The control device 80 controls the combustion operation of the engine 30, to control rotational power to be outputted from the engine 30. The control device 80 also controls the motor driver 70. The control device 80 controls the inverter 71 of the motor driver 70, to control the multi-phase brushless motor 50.

### [Details of Parts]

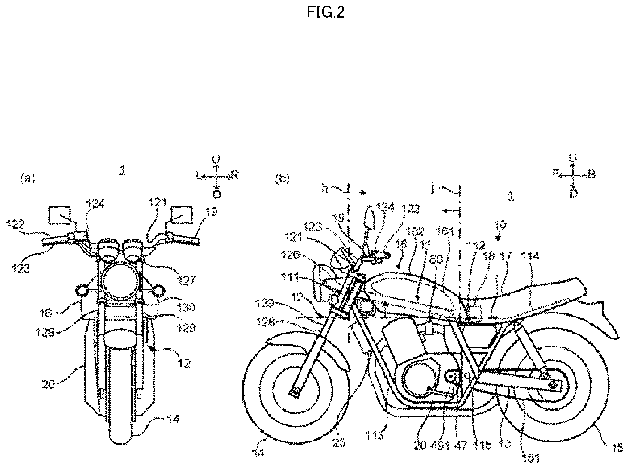

In the following, the straddled vehicle 1 according to the embodiment of the present teaching will be described more specifically. FIG. 2(a) and (b) are views of the straddled vehicle 1 shown in FIG. 1. FIG. 2(a) is a front view of the straddled vehicle 1 shown in FIG. 1, and FIG. 2(b) is a left side view of the straddled vehicle 1 shown in FIG. 1. The straddled vehicle 1, more specifically, is an MT type straddled vehicle. The straddled vehicle 1 is a motorcycle. The straddled vehicle 1, more specifically, is an MT type motorcycle. The straddled vehicle 1, more specifically, includes the vehicle body 10 and the engine unit 20. The vehicle body 10 includes the frame 11, the front fork 12, the rear arm 13, the front wheel 14, the rear wheel 15, the fuel tank 16, the seat 17, and the side cover 66.

The frame 11 includes the head pipe 111, the main frame 112, a down tube 113, a seat frame 114, and a swing arm pivot 115.

The head pipe 111 supports the front fork 12 so as to enable the front fork 12 to swivel.

The main frame 112 extends from the head pipe 111 backward (B) in the front-back direction FB of the straddled vehicle 1. The main frame 112, which is a core part of the frame 11, cooperates with the down tube 113 to support the engine unit 20. The main frame 112 supports the fuel tank 16, too. The down tube 113 extends from the head pipe 111 backward (B) in the front-back direction FB as well as downward (D) in the up-down direction UD of the straddled vehicle 1. The back end of the main frame 112 and the back end of the down tube 113 in the front-back direction FB of the straddled vehicle 1 are coupled to each other.

The seat frame 114, which is provided to a back portion of the main frame 112 in the front-back direction FB of the straddled vehicle 1, extends from the back portion of the main frame 112 backward (B). The seat 17 is attached to the seat frame 114. The seat 17 is of saddle type. The fuel tank 16 and the seat 17 form a part of the upper contour of the vehicle body 10 when the straddled vehicle 1 is viewed in the left-right direction LR.

The swing arm pivot 115 is provided at the point of coupling between the main frame 112 and the down tube 113. The swing arm pivot 115 supports the rear arm 13 swingably. The rear arm 13 supports the rear wheel 15 rotatably. The rear wheel 15 is a driving wheel that receives power outputted from the engine unit 20 and drives the straddled vehicle 1.

The fuel tank 16 is disposed so as to satisfy all of the following requirements (H) to (J). The requirements (H) to (J) are as follows:
(H) at least a part of the fuel tank 16 is positioned farther in the backward direction B than the lowermost end of the head pipe 111 in view of the left-right direction LR of the straddled vehicle 1 (in a region farther in the backward direction B than the alternate long and short dash line h in FIG. 2(b));
(I) at least a part of the fuel tank 16 is positioned farther in the upward direction U than the uppermost end of the engine 30 in view of the left-right direction LR of the straddled vehicle 1 (in a region farther in the upward direction U than the alternate long and short dash line i in FIG. 2(b)); and
(J) at least a part of the fuel tank 16 is positioned farther in the frontward direction F than the frontmost end of the seat 17 (in a region farther in the frontward direction F than the alternate long and short dash line j in FIG. 1(b)).

The fuel tank 16 includes a tank part 161 and a fuel tank cover 162. The fuel tank cover 162 covers the tank part 161. The fuel tank cover 162 defines a space in at least a part of a region between the frame 11 and the inner wall of the fuel tank cover 162 in view of the left-right direction LR of the straddled vehicle 1.

The handlebar 121 is fixed to the upper end of the front fork 12 in the up-down direction UD of the straddled vehicle 1. The handlebar 121 has, in its left portion in the left-right direction LR of the straddled vehicle 1, the manual clutch lever 19. The handlebar 121 has, in its right portion, an accelerator operator 122, a brake lever 123, and an engine start switch 124.

The engine unit 20 outputs power from the output unit 47 toward the rear wheel 15. The output unit 47 is a sprocket around which a chain 151 is wrapped. The output unit 47 is provided outside a housing of the engine unit 20. Actually, the output unit 47 is covered with a cover (not shown) included in the vehicle body 10, but in FIG. 2, the output unit 47 is illustrated with the solid line for the purpose of making it easier to see the output unit 47 being exposed outside the housing of the engine unit 20. Power of the engine unit 20 is transmitted toward the rear wheel 15 via the sprocket and chain 151 as the output unit 47. The housing of the engine unit 20 has a step 491. The driver of the straddled vehicle 1, who sits astride on the seat 17, can place their feet on the step 491. The battery 18 is disposed inside the vehicle body 10. The battery 18 accumulates electricity.

### [Engine Unit]

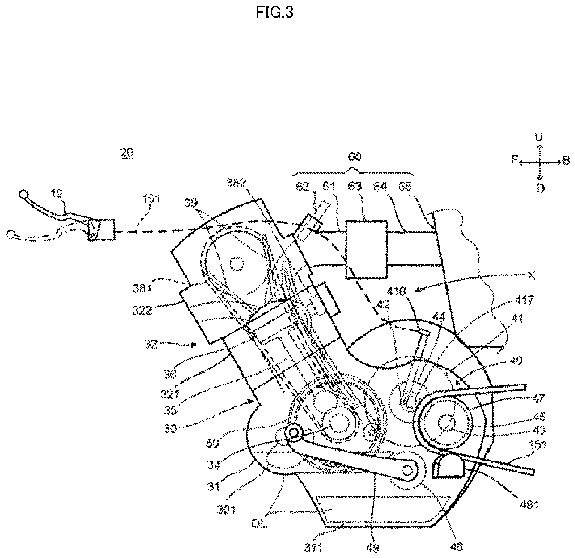

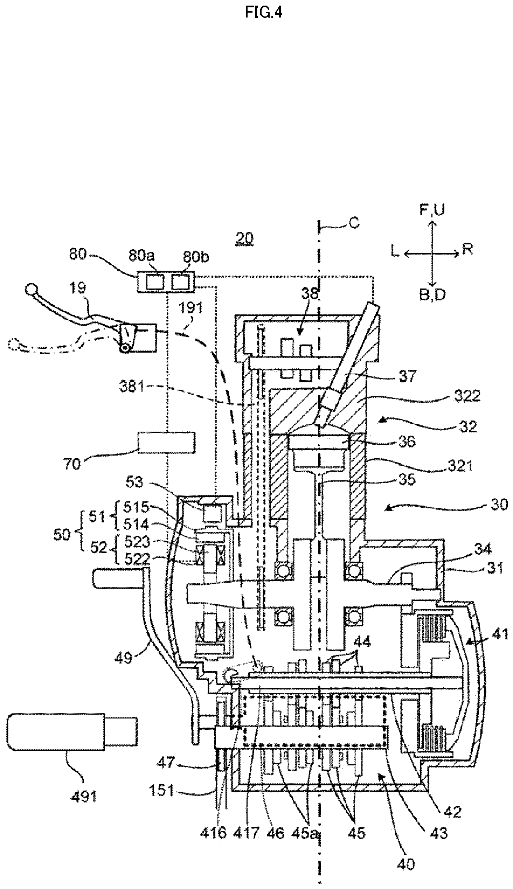

FIG. 3 is a left side view showing on an enlarged scale the engine unit 20 shown in FIG. 1. FIG. 4 is a cross-sectional view showing on an enlarged scale the engine unit 20 shown in FIG. 1. The engine unit 20 includes the engine 30, the manual transmission 40, the multi-phase brushless motor 50, and the intake system 60. The engine unit 20 also includes a radiator 25 (see FIG. 2). That is, the engine 30 is a water-cooling type engine.

The engine 30 includes the crank case 31 and the cylinder 32. The engine 30 also includes the crankshaft 34, a connecting rod 35, the piston 36, a spark plug 37 (see FIG. 4), a valve operation mechanism 38 (see FIG. 4), and valves 39.

The crank case 31 and the cylinder 32 constitute the housing of the engine unit 20. The cylinder 32 is composed of a cylinder body 321 and a cylinder head 322. The piston 36 is reciprocably disposed in the cylinder body 321. The crank case 31 is connected to the cylinder body 321.

The engine 30 is attached to the frame 11 such that the cylinder 32 is in an upward-downward position.

The crankshaft 34 is disposed in the crank case 31, and is rotatably supported by the crank case 31. The piston 36 and the crankshaft 34 are connected to each other via the connecting rod 35. The valves 39 and the valve operation mechanism 38 are disposed in the cylinder head 322.

The crankshaft 34, the manual transmission 40, and the multi-phase brushless motor 50 are disposed in the crank case 31. Power of the crankshaft 34 is transmitted to the valve operation mechanism 38 via a cam chain 381. The valve operation mechanism 38 operates the valves 39 in synchronization with rotations of the crankshaft 34 and reciprocations of the piston 36. The chain tensioner 382 adjusts the slack of the cam chain 381.

The engine 30 includes a balancer 301. The balancer 301 is disposed farther frontward (F) in the front-back direction FB than the vertical line passing through the crankshaft axis in view of the left-right direction LR.

The crank case 31 is configured such that the inside thereof is lubricated with low-viscosity oil OL. That is, the engine 30 has the low-viscosity oil OL. The crankshaft 34, the manual transmission 40, and the multi-phase brushless motor 50 are lubricated with the same low-viscosity oil OL. The low-viscosity oil OL lubricates and cools respective parts of the engine unit 20.

The low-viscosity oil OL is sent under pressure by an oil pump (not shown), to circulate through the engine 30. In more detail, the low-viscosity oil OL is collected in an oil pan 311 provided in a lower portion of the crank case 31. The low-viscosity oil OL collected in the oil pan 311 is pressurized by the oil pump (not shown). The pressurized low-viscosity oil OL is supplied to the piston 36 and the crankshaft 34 through an oil supply passage (not shown). The oil supply passage is made up of, for example, a hole bored inside the crankshaft 34, a hole bored inside the cylinder body 321, and a groove formed in a connecting surface between the cylinder body 321 and the cylinder head 322.

The low-viscosity oil OL is also supplied to the manual transmission 40 and the multi-phase brushless motor 50. More specifically, the low-viscosity oil OL supplied to the piston 36 flows to the multi-phase brushless motor 50, which is disposed farther in the downward direction D than the piston 36 in the up-down direction UD. The low-viscosity oil OL is collected such that the multi-phase brushless motor 50 is partially soaked in the low-viscosity oil OL. For example, the low-viscosity oil OL is collected in a dam wall (not shown) provided so as to surround a part of the multi-phase brushless motor 50, so that the part of the multi-phase brushless motor 50 is soaked in the low-viscosity oil OL. For example, the low-viscosity oil OL having flowed over the dam wall flows to the oil pan 311. As the multi-phase brushless motor 50 rotates, the low-viscosity oil OL adhered to the multi-phase brushless motor 50 spreads in the crank case 31.

Part of the low-viscosity oil OL is also supplied to the valve operation mechanism 38 via the cam chain 381. In this manner, the inside of the engine 30 is lubricated with the low-viscosity oil OL. Thus, the inside of the crank case 31 is lubricated with the low-viscosity oil OL.

The low-viscosity oil OL is a lubricant whose low-temperature viscosity grade according to the SAE viscosity classification specified in SAE J300 is lower than 20W. The lower the viscosity grade is, the lower is the oil viscosity. The high-temperature viscosity grade of the lubricant according to the SAE viscosity classification is not particularly limited. Given that X is an integer equal to or more than 0 and less than 20, and Y is an integer equal to or more than 0; the SAE viscosity grade of the lubricant is expressed as XW-Y. The lubricant includes a base oil and an additive. Roughly speaking, as the lubricant has a lower viscosity, the lubricant has a lower evaporating temperature, so that the lubricant is more likely to evaporate. Depending on a type of the base oil (for example, whether it is a mineral oil or a synthetic oil) and the additive, the evaporating temperature may vary even though the lubricant viscosity is unchanged. Evaporation characteristics of the lubricant can be obtained by, for example, a boiling point distribution measurement method using a gas chromatography simulated distillation according to ASTM D6352.

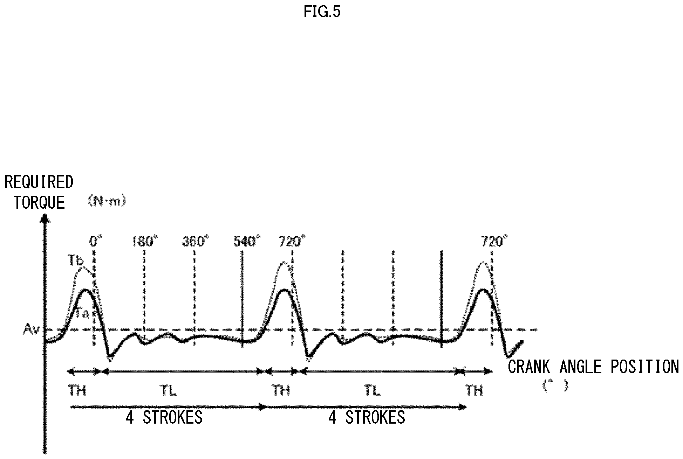

FIG. 5 is an illustrative diagram schematically showing the relationship between the required torque and the crank angle position of the engine 30. In FIG. 5, the solid line Ta indicates a torque required for rotating the crankshaft 34 while the engine 30 is not performing the combustion operation. The engine 30 is a single cylinder engine. The engine 30 has, in four strokes, a high-load region TH in which a high load is put on rotation of the crankshaft 34, and a low-load region TL in which a load put on rotation of the crankshaft 34 is lower than the load in the high-load region TH.

The high-load region means a region in one combustion cycle of the engine 30 where a load torque is higher than an average value Av of load torques over the one combustion cycle. On the basis of the rotation angle of the crankshaft 34, the low-load region TL is equal to or wider than the high-load region TH. To be specific, the low-load region TL is wider than the high-load region TH. In other words, a rotation angle region corresponding to the low-load region TL is wider than a rotation angle region corresponding to the high-load region TH. The engine 30, during its rotation, repeats an intake stroke, a compression stroke, an expansion stroke (combustion stroke), and an exhaust stroke. The compression stroke overlaps the high-load region TH. The low-load region TL is positioned between one combustion and another combustion.

One combustion cycle of the engine 30 includes one intake stroke, one compression stroke, one expansion stroke, and one exhaust stroke. The engine 30 rotates while repeating the intake stroke, the compression stroke, the expansion stroke, and the exhaust stroke. In the intake stroke, a mixed gas, which is a mixture of a fuel and air, is supplied to a combustion chamber defined by the cylinder body 321, the cylinder head 322, and the piston 36 as illustrated in FIG. 3 and FIG. 4. In the compression stroke, the piston 36 compresses the mixed gas in the combustion chamber. In the expansion stroke, the mixed gas ignited by the spark plug 37 is combusted, and pushes the piston 36. In the exhaust stroke, a gas existing after the combustion is, as an exhaust gas, discharged out of the combustion chamber. A reciprocating motion of the piston 36 is converted into rotation of the crankshaft 34. Energy produced by the fuel combustion in the engine 30 is, as power of the crankshaft 34, outputted to the manual transmission 40.

### [Manual Multi-Stage Transmission Device]

The manual transmission 40 converts a rotation speed of the crankshaft 34 in accordance with a gear stage. The manual transmission 40 is a stepped transmission having plural gear stages. The manual transmission 40 includes the manual clutch 41, an input shaft 42, an output shaft 43, driving gears 44, driven gears 45, dog rings 45a, a gear stage setting mechanism 46, and the output unit 47. The manual transmission 40 converts a rotation speed of the crankshaft 34 at a gear ratio according to a manipulation on the shift pedal 49, and outputs a resulting speed. The shift pedal 49 is manipulated by the driver's foot.

The manual clutch 41 blocks power transmission between the engine 30 and the rear wheel 15 (see FIG. 1), in response to a manipulation on the manual clutch lever 19. More specifically, the manual clutch 41 blocks power transmission between the crankshaft 34 and the input shaft 42. The manual clutch 41 blocks the power transmission in response to a driver's manipulation on the manual clutch lever 19.

The manual clutch 41 is connected to the manual clutch lever 19 via a mechanical wire 191. More specifically, the manual clutch 41 is connected to the manual clutch lever 19 via the mechanical wire 191, a clutch arm 416, and a lifter rod 417. A manipulation on the manual clutch lever 19 displaces the mechanical wire 191, the clutch arm 416, and the lifter rod 417. As a result, power transmission is blocked.

The plural driving gears 44, which are disposed on the input shaft 42, are configured to constantly rotate together with the input shaft 42. Each of the driving gears 44 is associated with each of gear stages. The plural driven gears 45, which are disposed on the output shaft 43, are configured to be rotatable relative to the output shaft 43. The dog rings 45a, which are disposed on the output shaft 43, are configured to rotate together with the output shaft 43. The plural driven gears 45 are configured such that each driven gear 45 is capable of meshing with a corresponding one of the driving gears 44. Constantly, at least one of the driven gears 45 is meshed with the corresponding driving gear 44. The output shaft 43 operates in conjunction with the output unit 47 of the engine unit 20. More specifically, the output shaft 43 is fixed to the output unit 47. Power received by the output shaft 43 is outputted from the output unit 47.

The gear stage setting mechanism 46 is configured to mechanically and selectively set, from among patterns of power transmission from the driving gears 44 of the input shaft 43 to the driven gears 45 of the output shaft 43, an effective pattern via a driving gear 44 and a driven gear 45 each associated with any one of the gear stages. The gear stage setting mechanism 46 includes a shift cam (not shown) and a shift fork (not shown). When the shift cam rotates in response to a driver's manipulation on the shift pedal 49, the shift fork is guided by a cam groove on the shift cam, to move the dog ring 45a in the axial direction. Each of the driven gear 45 and the dog ring 45a has dogs. For example, as the dog ring 45a moves in the axial direction, the dogs provided in the driven gear 45 are engaged with the dogs provided in the dog ring 45a. Consequently, power transmission associated with any of the gear stages becomes effective. In this manner, the manual transmission 40 changes the gear ratio in response to a driver's manipulation on the shift pedal 49. The rotation speed of the crankshaft 34 is converted at a gear ratio according to the manipulation on the shift pedal 49, and is outputted from the output unit 47.

As the driver manipulates the shift pedal 49 in the upward direction U or the downward direction D with the tip of his/her left foot placed on the step 491, the shift pedal 49 is pivotable around its rotation shaft. In response to this, the gear stage setting mechanism 46 sets an effective pattern of power transmission via the driving gear 44 and the driven gear 45 each associated with one gear stage.

### [Permanent-Magnet Type Starter Generator]

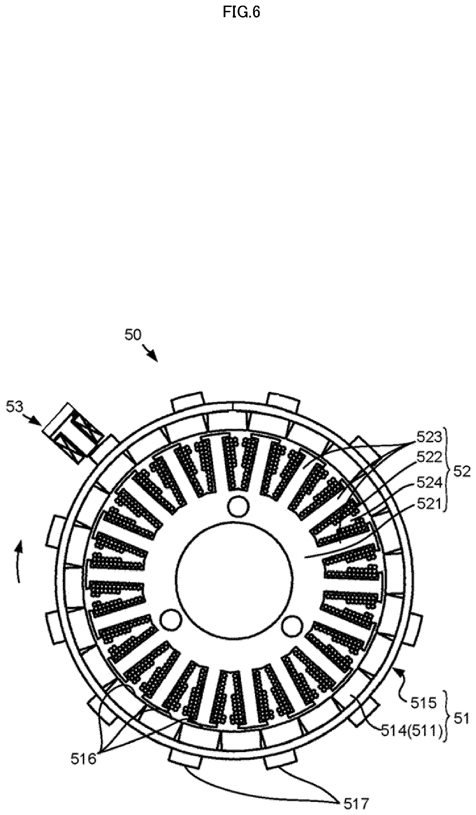

FIG. 6 is a cross-sectional view showing a cross-section perpendicular to the rotation axis of the multi-phase brushless motor 50 shown in FIG. 3 and FIG. 4. The multi-phase brushless motor 50 will be described with reference to FIG. 3 to FIG. 6. The multi-phase brushless motor 50 is provided to the crankshaft 34. The multi-phase brushless motor 50 is a permanent-magnet type three-phase brushless motor. The multi-phase brushless motor 50 functions as a permanent-magnet type three-phase brushless type generator.

The multi-phase brushless motor 50 includes a rotor 51 and a stator 52. The multi-phase brushless motor 50 is of radial gap type. The multi-phase brushless motor 50 is of outer rotor type. That is, the rotor 51 is an outer rotor. The stator 52 is an inner stator.

The rotor 51 includes a rotor body part 515. The rotor body part 515 is made of a ferromagnetic material, for example. The rotor 51 has a bottomed cylinder shape connected to the crankshaft 34 at a location between the stator 52 and the cylinder 32 of the engine 30 in the axial direction in which the crankshaft 34 extends. The rotor body part 515 is fixed to the crankshaft 34. The rotor 51 does not have a winding to which a current is supplied. The rotor 51 is without a fan or a fin that produces an air stream for cooling. The rotor 51 is positioned so as to be in contact with the low-viscosity oil OL.

The rotor 51 includes a permanent magnet part 511. The permanent magnet part 511 faces the stator 52 via a gap. The rotor 51 has plural magnetic pole parts 514. The plural magnetic pole parts 514 are formed by the permanent magnet part 511. The plural magnetic pole parts 514 are provided on an inner peripheral surface of the rotor body part 515. The permanent magnet part 511 is made of plural permanent magnets. Alternatively, it may be possible that the permanent magnet part 511 is made of a single permanent magnet that is magnetized to have plural magnetic pole pairs.

The plural magnetic pole parts 514 are provided such that N-poles and S-poles alternately appear in the circumferential direction of the multi-phase brushless motor 50. Each of the magnetic pole parts 514 has a magnetic pole face 516 facing the stator 52. In the embodiment, the number of magnetic pole faces of the rotor 51 facing the stator 52 is twenty-four. The number of magnetic pole faces of the rotor 51 means the number of magnetic pole faces facing the stator 52. No magnetic material is provided between the magnetic pole parts 514 (magnetic pole faces 516) and the stator 52.

The magnetic pole parts 514 are disposed farther outward than the stator 52 in the radial direction of the multi-phase brushless motor 50.

The stator 52 includes a stator core 521 and plural stator windings 522. The stator core 521 has plural teeth 523 arranged at intervals in the circumferential direction. The plural teeth 523 extend radially outward from the stator core 521 in an integrated manner. In the embodiment, a total of eighteen teeth 523 are arranged at intervals in the circumferential direction. In other words, the stator core 521 has a total of eighteen slots 524 provided at intervals in the circumferential direction. The teeth 523 are arranged at equal intervals in the circumferential direction.

The rotor 51 has the magnetic pole parts 514 greater in number than the teeth 523. That is, the multi-phase brushless motor 50 has the magnetic pole parts 514 greater in number than the teeth 523. The number of magnetic pole faces is greater than 2/3 of the number of slots. More specifically, the number of magnetic pole faces is 4/3 of the number of slots.

Each of the teeth 523 is wound with a corresponding one of the stator windings 522. That is, the stator windings 522 of plural phases are disposed so as to be through the respective slots 524. FIG. 6 shows a state where the stator windings 522 reside in the slots 524. Each of the stator windings 522 of plural phases belongs to a corresponding one of U-phase, V-phase, or W-phase. The stator windings 522 are arranged in the order of U-phase, V-phase, and W-phase, for example.

The engine unit 20 is provided with a rotor position detection device 53. The rotor position detection device 53 is a device configured to detect a position of the rotor 51. The rotor position detection device 53 is positioned such that the rotor position detection device 53 comes to face any of detection object parts 517 as the rotor 51 rotates. A pickup coil is used for the rotor position detection device 53. The rotor position detection device 53 is attached to the crank case 31, and is disposed in a storage space of the multi-phase brushless motor 50.

The rotor 51 is attached to the crankshaft 34 not via a power transmission mechanism (for example, a belt, a chain, a gear, a speed-reducing gear, a speed-increasing gear, or the like). The rotor 51 rotates at a speed ratio of 1:1 with respect to the crankshaft 34. More specifically, the rotor 51 is connected to the crankshaft 34 so as to rotate at the same speed as that of the crankshaft 34. The rotation axis of the multi-phase brushless motor 50 and the rotation axis of the crankshaft 34 substantially coincide with each other. More specifically, the rotor 51 is fixed to the crankshaft 34. Still more specifically, the rotor 51 is directly connected to the crankshaft 34. The rotor 51 rotates integrally with the crankshaft 34. The multi-phase brushless motor 50 has its rotation shaft integrated with the crankshaft 34. After the engine starts, the multi-phase brushless motor 50 is still supplied with electricity, to drive the crankshaft 34. According to the invention, the multi-phase brushless motor 50 has a function for assisting an engine output of the straddled vehicle 1.

### [Arrangement of Intake System]

The intake system 60 includes intake hoses 61, 64, a fuel injection device 62, a throttle body 63, and an air cleaner 65 (see FIG. 3). The intake hose 61 connects an intake port of the cylinder 32 of the engine 30 to the throttle body 63. The fuel injection device 62 is attached to the intake hose 61, and supplies a fuel to air flowing into the engine 30. The throttle body 63 adjusts the amount of air flowing into the engine 30. The air cleaner 65 removes dust, dirt, and the like from air to be taken into the engine 30. The intake hose 64 connects the throttle body 63 to the air cleaner 65.

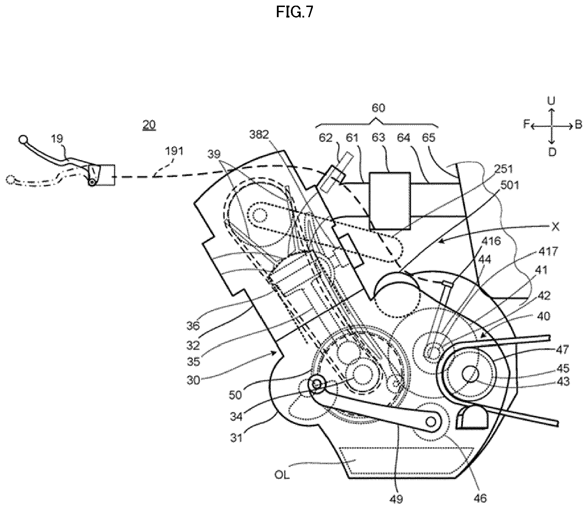

Now referring to FIG. 3 and FIG. 7, a surrounded region X will be described. FIG. 7 is a left side view showing on an enlarged scale an engine unit of a straddled vehicle including a starter motor that is specialized in a start function, as a comparative example to the embodiment. Referring to the comparative example of FIG. 7, as is conventionally the case, a starter motor 501 that is specialized in a start function is normally disposed at the upper edge of a crank case 31 in a surrounded region X, in order that the starter motor can drive a crankshaft. In the straddled vehicle according to the comparative example shown in FIG. 7, not only the starter motor 501 but also a clutch arm 416, a mechanical wire 191, a chain tensioner 382, and the like are disposed in the surrounded region X. In addition, a radiator hose 251 is also disposed in a case where the engine 30 is a water-cooling type engine. Moreover, a silencer or the like may be disposed.

In the straddled vehicle 1 according to the embodiment, the starter motor 501 can be eliminated from the surrounded region X. As a result of eliminating the conventional starter motor 501 from the surrounded region X, a margin space appears as a surrounded region X, in which other components are allowed to be arranged with a high degree of freedom. Consequently, in the straddled vehicle 1 according to the embodiment, components related to operations of the engine 30 can be arranged with a high degree of freedom by using a space where the starter motor 501 specialized in the start function would conventionally be disposed. The components related to operations of the engine 30 include, for example, a radiator hose, a canister, a chain tensioner, a thermostat, a throttle valve, and the like. Accordingly, the straddled vehicle 1 according to the embodiment can offer an increased degree of freedom in layout of components arranged in the surrounded region X.

The engine 30 has the balancer 301 disposed farther in the frontward direction F than the vertical line passing through the crankshaft axis in view of the left-right direction LR (see FIG. 3). In the engine 30 provided with the balancer 301, a portion corresponding to the balancer 301 protrudes from the engine 30. In the straddled vehicle 1, the balancer 301 is disposed farther frontward (F) in the front-back direction FB than the vertical line passing through the crankshaft axis. Thus, the balancer 301 is disposed so as to avoid the surrounded region X. Accordingly, the straddled vehicle 1 can have an improved space efficiency in the surrounded region X.

To be specific, the surrounded region X is a region enclosed by the upper contour of the crank case 31, the rear contour of the cylinder 32, and the lower contour of the intake system 60, for example. If there is any region completely enclosed by the respective contours, the region serves as a surrounded region. If there are two or more completely enclosed regions, each of the regions serves as a surrounded region.

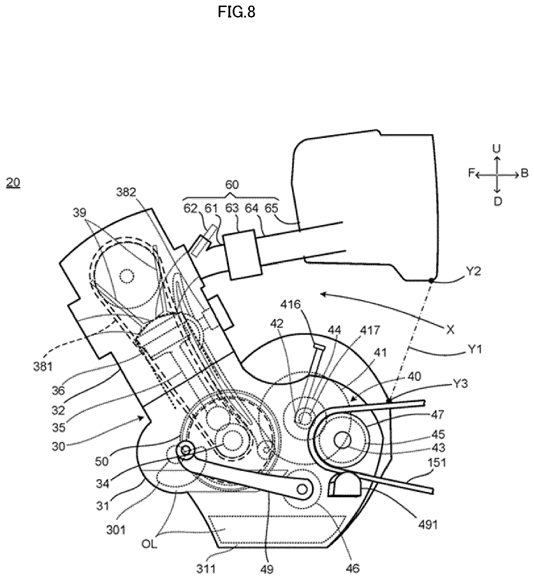

FIG. 8 is a diagram illustrating an example of the surrounded region X shown in FIG. 3. In a case where a region that is completely enclosed by the respective contours is not present as shown in FIG. 8, the surrounded region X is partially open, and thus has an opening. Connecting the opposite ends of the opening by a line segment Y1 can define a surrounded region. Since the intake system 60 is connected to the cylinder 32 while the cylinder 32 is connected to the crank case 31, the opening may be formed between the intake system 60 and the crank case 31, for example. In this configuration, a first end Y2 of the opening is located on the contour of the intake system 60, and a second end Y3 of the opening is located on the contour of the crank case 31. Connecting the first end Y2 and the second end Y3 of the opening to each other by the line segment Y1 can define the surrounded region X. In this case, the opposite ends of the opening are set so as to maximize the surrounded region X, for example.

The straddled vehicle 1 includes the motor driver 70 and the control device 80 (see FIG. 4). The motor driver 70 performs switching of a current to be supplied to the multi-phase brushless motor 50. The motor driver 70 includes the inverter 71. The inverter 71 controls a current flowing between the battery 18 and the multi-phase brushless motor 50. The control device 80 controls the combustion operation of the engine 30, to control rotational power outputted from the engine 30. The control device 80 also controls the motor driver 70. The control device 80 controls the inverter 71 of the motor driver 70, to control the multi-phase brushless motor 50.

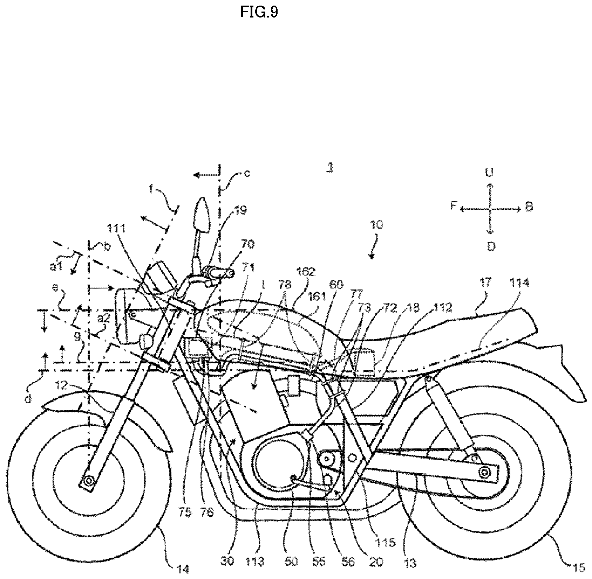

FIG. 9 is a left side view of the straddled vehicle 1 shown in FIG. 1. As shown in FIG. 9, the motor driver 70 is disposed so as to satisfy all of the following requirements (A) to (C) in view of the left-right direction LR of the straddled vehicle 1:
(A) at least a part of the motor driver 70 is positioned so as to overlap a region that is surrounded by the upper edge of the upper bracket 127, the right edge of the right fork 128, the left edge of the left fork 129, and the lower edge of the under bracket 130 (in a region farther in the downward direction D than the alternate long and short dash line a1 in FIG. 9, and farther in the upward direction U than the alternate long and short dash line a2 in FIG. 9) while the straddled vehicle 1 is in the upright state, when viewed in the direction P perpendicular to both the left-right direction LR and the direction Q parallel to the head pipe 111;
(B) at least a part of the motor driver 70 is positioned farther in the backward direction B than the center of the front wheel 14 (in a region farther in the backward direction B than the alternate long and short dash line b in FIG. 9) in view of the left-right direction LR of the straddled vehicle 1; and
(C) at least a part of the motor driver 70 is positioned farther in the frontward direction F than the frontmost end of the engine 30 (in a region farther in the frontward direction F than the alternate long and short dash line c in FIG. 9) in view of the left-right direction LR of the straddled vehicle 1.

It may be possible that the motor driver 70 is disposed so as to satisfy the following requirements (D) and (E) in addition to the requirements (A) to (C) in view of the left-right direction LR of the straddled vehicle 1:
(D) at least a part of the motor driver 70 is positioned farther in the upward direction U than the uppermost end of the engine 30 (in a region farther in the upward direction U than the alternate long and short dash line d in FIG. 9) when in the left-right direction view LR of the straddled vehicle 1; and
(E) at least a part of the motor driver 70 is positioned farther in the downward direction D than the uppermost end of the head pipe 111 (in a region farther in the downward direction D than the alternate long and short dash line e in FIG. 9) in view of the left-right direction LR of the straddled vehicle 1.

The multi-phase brushless motor 50 has a function as a starter motor as well as a function as a generator. The multi-phase brushless motor 50 is directly connected to the crankshaft 34. The multi-phase brushless motor 50, therefore, is required to generate a torque that is high enough to rotate the crankshaft 34 at a time of start. The motor driver 70 controls the multi-phase brushless motor 50 by switching a current to be supplied to the multi-phase brushless motor 50. Thus, the motor driver configured to control the multi-phase brushless motor 50 generates heat when driving the multi-phase brushless motor 50. The motor driver 70, therefore, is required to dissipate heat generated in driving.

Since the motor driver 70 is disposed so as to satisfy all of the above-mentioned requirements (A) to (C) in view of the left-right direction LR of the straddled vehicle 1, the motor driver 70 is likely to receive relative wind flowing toward the movable space of the front fork 12 or relative wind having passed through the movable space. This easily keeps the state where heat of the motor driver 70 is dissipated by air while the straddled vehicle 1 is traveling, and thus a temperature rise can be suppressed easily. Accordingly, the current switching function of the motor driver 70 is less likely to be hindered. Degradation of the function of the multi-phase brushless motor 50 can be suppressed, therefore. In this manner, the starter motor is eliminated from the region higher than the crank case 31, and the motor driver 70 is arranged in the above-described position. This makes it possible to increase the degree of freedom in arranging components that are disposed in the region higher than the crank case 31, with suppressing degradation of the function of the starter motor.

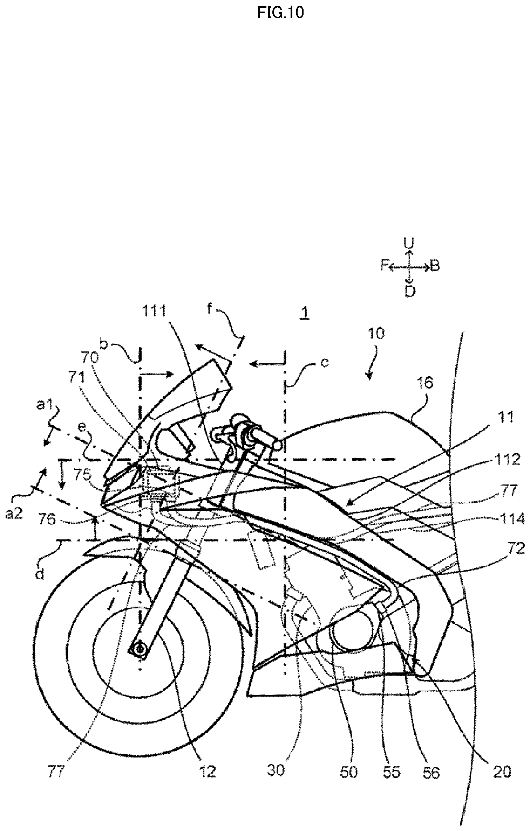

The motor driver 70 may be arranged so as to satisfy not only the requirements (A) to (C) but also the following requirement in view of the left-right direction LR of the straddled vehicle 1. FIG. 10 is a left side view showing on an enlarged scale an example of how the motor driver 70 is arranged in the straddled vehicle 1 according to the embodiment. Referring to FIG. 10, the motor driver 70 is disposed so as to satisfy (F):
(F) at least a part of the motor driver 70 is arranged farther in the frontward direction F than an inclined line that is parallel to the head pipe 111 and passes through the uppermost point of the front wheel 14 (in a region farther in the frontward direction F than the alternate long and short dash line f in FIG. 9 and FIG. 10), in view of the left-right direction LR of the straddled vehicle 1.

Arranging the motor driver 70 so as to satisfy the requirement (F) can suppress an influence that heat of the engine 30 has on the motor driver 70 in traveling.

The motor driver 70 is disposed so as to satisfy not only the requirements (A) to (C) but also the requirement (G) in view of the left-right direction LR of the straddled vehicle 1:
(G) at least a part of the motor driver 70 is arranged farther in the upward direction U than the lower end of the head pipe 111 in the up-down direction UD (in a region farther in the upward direction U than the alternate long and short dash line g in FIG. 9).

The right fork 128 and the left fork 129 of the front fork 12 create a large movable space at a location farther in the upward direction U than the lower end of the head pipe 111. The large movable space can be used to keep the state where heat of the motor driver 70 is dissipated by air. Accordingly, arranging the motor driver 70 so as to satisfy the requirement (G) makes it possible to further increase the degree of freedom in arranging components that are disposed in the region higher than the crank case 31, with suppressing degradation of the function of the multi-phase brushless motor 50.

The motor driver 70 is disposed so as to satisfy the requirement (K) in addition to the requirements (A) to (C) in view of the left-right direction LR of the straddled vehicle 1:
(K) at least a part of the motor driver 70 is disposed between the frame 11 and the inner wall of the fuel tank cover 162 in view of the left-right direction LR of the straddled vehicle 1.

With the motor driver 70 disposed so as to satisfy the requirement (K), the straddled vehicle 1 can suppress protrusion of the motor driver 70 in the left-right direction LR.

Moreover, the motor driver 70 is disposed so as to satisfy the requirement (L) in addition to the requirements (A) to (C) in view of the left-right direction LR of the straddled vehicle 1:
(L) at least a part of the motor driver 70 is positioned lower in the downward direction D than the upper edge of the frame 11, when such part of the frame 11 is aligned at the same front-rear position of the vehicle as the motor driver 70 (in a region farther in the downward direction D than the alternate long and short dash line 1 in FIG. 9).

Arranging the motor driver 70 so as to satisfy the requirement (L) makes it likely that the motor driver 70 receives relative wind having passed through the movable space or the vicinity thereof, so that degradation of the function of the multi-phase brushless motor 50 can be suppressed more effectively.

Accordingly, the satisfaction of at least any of the requirements (D), (E), (F), (G), (K), or (L) in addition to the requirements (A) to (C) enables the straddled vehicle 1 to further increase the degree of freedom in arranging components that are disposed in the region farther in the upward direction U than the crank case, with suppressing degradation of the function of the starter motor.

The motor driver 70 has a hexahedral shape having smallest surfaces, second smallest surfaces, and largest surfaces. With this configuration, the motor driver 70 is arranged such that at least a part of the largest surfaces faces the main frame 112. This can improve the space efficiency in the straddled vehicle 1. The motor driver 70 is arranged farther in the downward direction D than the upper edge of the frame 11 in the up-down direction UD of the straddled vehicle 1. The motor driver 70, therefore, does not obstruct arranging of the seat 17 and the fuel tank 16.

The multi-phase brushless motor 50 of the engine unit 20 is connected to the motor driver 70 by an electric cable 72. The electric cable 72 includes a core made of a conductor, a coating enveloping the core, and a tube covering the coating. Thanks to this configuration of the electric cable 72, any damage to the electric cable 72 can be easily checked by inspecting a damage to the tube. The coating is made of a material with an achromatic color, while the tube is made of a material with a chromatic color. Since the tube is made of a material with a chromatic color, the noticeability of the motor driver 70 relative to the electric cable 72 can be enhanced, which makes it easy to check a damage. In addition, the electric cable 72 is configured such that the coating having an achromatic color is covered with the tube having a chromatic color, which gives a high noticeability to a damage to the tube. The straddled vehicle 1, therefore, allows an operation of, for example, replacing a component disposed near the electric cable 72 to be performed without any contact or damage to the electric cable 72. Accordingly, the maintainability of the straddled vehicle 1 can be improved.

The electric cable 72 extends along the frame 11. More specifically, the electric cable 72 extends along the main frame 112. The electric cable 72 connects the multi-phase brushless motor 50 to the motor driver 70. Thus, a cable thicker than a communication cable, for example, is used as the electric cable 72. Since the electric cable 72 is arranged along the main frame 112, a space around the frame 11 can be used to arrange the electric cable 72 so as to avoid obstructing other components of the straddled vehicle 1. As a result, the degree of freedom in arranging components can be further increased. The electric cable 72 is clamped to the frame 11, and more specifically to the main frame 112 and the seat frame 114, by fasteners 73. Since the electric cable 72 is clamped to the main frame 112 and the seat frame 114, it is possible that the electric cable 72 is arranged so as to avoid obstructing components of the straddled vehicle 1. As a result, the degree of freedom in arranging the other components can be increased.

The multi-phase brushless motor 50 is provided with a motor lead-out part 55 through which the electric cable 72 connected to the motor driver 70 is led out from the multi-phase brushless motor 50. The motor lead-out part 55 is arranged such that the electric cable 72, which is to be led out through the motor lead-out part 55, extends in a direction toward the frame 11, and more specifically toward the main frame 112, in view of in the left-right direction LR. The electric cable 72, which is thick, is not easily bent, and therefore its direction is less likely to change. Arranging the motor lead-out part 55 so as to make the electric cable 72 extend in a direction toward the main frame 112 allows the electric cable 72 to approach the main frame 112 without being bent, and thus without a change of its direction. In addition, a situation where the electric cable 72 extending from the motor lead-out part 55 of the multi-phase brushless motor 50 is bent on the way can be avoided.

The motor lead-out part 55 is also arranged such that the electric cable 72, which is to be led out through the motor lead-out part 55, extends in the backward direction B. The motor lead-out part 55 is also arranged such that the electric cable 72, which is to be led out through the motor lead-out part 55, extends in the upward direction U. Arranging the motor lead-out part 55 of the multi-phase brushless motor 50 in this manner can protect the motor lead-out part 55 from stones, water, and the like. Arranging the motor lead-out part 55 in this manner allows the electric cable 72, which is to be led out through the motor lead-out part 55, to extend in the upward direction U toward the motor driver 70, which is disposed farther in the upward direction U than the crank case 31. Accordingly, it is possible for the electric cable 72 to be bent only to a small extent.

The motor driver 70 is provided with a driver lead-out part 75 through which the electric cable 72 connected to the multi-phase brushless motor 50 is led out from the motor driver 70. The driver lead-out part 75 is arranged such that the electric cable 72, which is to be led out through the driver lead-out part 75, extends in the downward direction D. Arranging the motor driver 70 in this manner can suppress infiltration of liquid into the motor driver 70.

The motor lead-out part 55 of the multi-phase brushless motor 50 has a grommet 56 through which the electric cable 72 passes. The driver lead-out part 75 of the motor driver 70 has a grommet 76 through which the electric cable 72 passes. Thanks to the grommets (56 and 76) through which the electric cable 72 passes, the motor lead-out part 55 and the driver lead-out part 75 have a high waterproofness.

The battery 18 is connected to the motor driver 70 by an electric cable 77. The electric cable 77 extends along the main frame 112. Since the electric cable 72 is arranged along the main frame 112, a space around the frame 11 can be used to arrange the electric cable 77 so as to avoid obstructing other components of the straddled vehicle 1. The electric cable 77 is clamped to the main frame 112 and the seat frame 114, by fasteners 78. Since the electric cable 72 is clamped to the main frame 112 and the seat frame 114, it is possible that the electric cable 77 is arranged so as to avoid obstructing components of the straddled vehicle 1. As a result, the degree of freedom in arranging the other components can be increased.

### [Electrical Configuration]

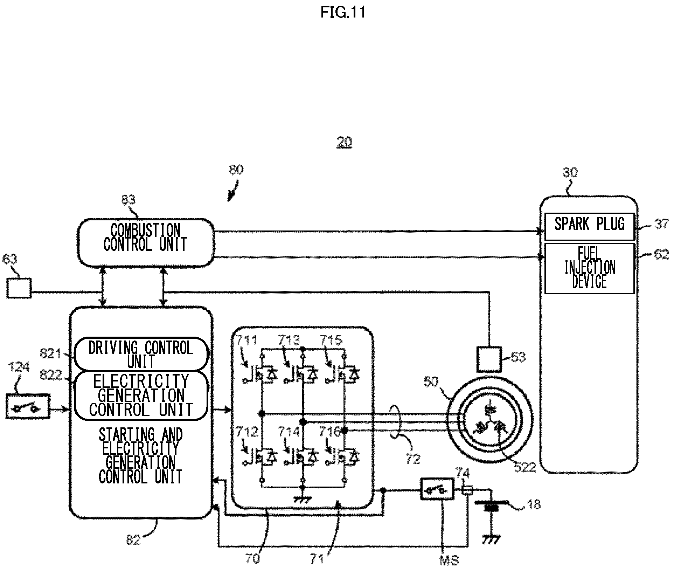

FIG. 11 is a block diagram outlining an electrical configuration of the engine unit 20 shown in FIG. 3 and FIG. 4. In FIG. 11, the battery 18 and a main switch MS, which are electrically connected to the engine unit 20, are also shown.

Connected to the motor driver 70 are the multi-phase brushless motor 50 and the battery 18. In a case of the multi-phase brushless motor 50 operating as a motor, the battery 18 supplies electricity to the multi-phase brushless motor 50.

The motor driver 70 includes the inverter 71. The inverter 71 controls a current flowing between the battery 18 and the multi-phase brushless motor 50. The inverter 71 includes plural switching parts 711 to 716. The inverter 71 is a three-phase bridge inverter.

Each of the switching parts 711 to 716 includes a switching element. Each switching element is a transistor, for example. More specifically, each switching element is a field effect transistor (FET).

The plural switching parts 711 to 716 are connected to each phase of the stator windings 522 of the plural phases. More specifically, of the plural switching parts 711 to 716, two switching parts connected in series constitute a half-bridge. The half-bridges of plural phases are connected in parallel with the battery 18. The switching parts 711 to 716, which constitute the half-bridges of each phase, are connected to the stator windings 522 of the plural phases, respectively.

The inverter 71 controls a current flowing between the battery 18 and the multi-phase brushless motor 50. Specifically, the switching parts 711 to 716 of the inverter 71 selectively allow or block the passing of a current between the battery 18 and the stator windings 522 of plural phases.

More specifically, when the multi-phase brushless motor 50 functions as a motor, energizing each of the stator windings 522 of the plural phases is selectively allowed or stopped by on/off-operation on the switching parts 711 to 716.

When the multi-phase brushless motor 50 functions as a generator, the passing of a current between each of the stator windings 522 and the battery 18 is selectively allowed or blocked by on/off-operation on the switching parts 711 to 716. By switching on/off the switching parts 711 to 716 one after another, a three-phase AC outputted from the multi-phase brushless motor 50 is subjected to a voltage control and rectification. The switching parts 711 to 716 controls a current to be outputted from the multi-phase brushless motor 50 to the battery 18.

The control device 80 includes a combustion control unit 83 and a starting and electricity generation control unit 82. The starting and electricity generation control unit 82 of the control device 80 controls the motor driver 70. Connected to the control device 80 are the spark plug 37, the fuel injection device 62, and the battery 18. Also connected to the control device 80 is the rotor position detection device 53. Based on a signal from the rotor position detection device 53, the control device 80 obtains a position of the rotor 51 in the multi-phase brushless motor 50. The control device 80 controls the inverter 71 in accordance with the position of the rotor 51.

The control device 80 includes the starting and electricity generation control unit 82 and the combustion control unit 83. The starting and electricity generation control unit 82 and the combustion control unit 83 of the control device 80 control the engine 30 and the multi-phase brushless motor 50.

The starting and electricity generation control unit 82 includes a driving control unit 821 and an electricity generation control unit 822. The driving control unit 821 starts the engine 30. The driving control unit 821 controls the motor driver 70 such that the multi-phase brushless motor 50 rotates the crankshaft 34. As the multi-phase brushless motor 50 rotates the crankshaft 34, the engine 30 starts. The electricity generation control unit 822 causes the multi-phase brushless motor 50 to perform an electricity generation operation. The electricity generation control unit 822 controls the motor driver 70 such that the multi-phase brushless motor 50 generates electricity. As the multi-phase brushless motor 50 generates electricity, the battery 18 is charged.

The driving control unit 821 and the electricity generation control unit 822, which in other words are the starting and electricity generation control unit 82, control operations of the multi-phase brushless motor 50 by controlling on/off-operation on the respective switching parts 711 to 716 of the motor driver 70. The starting and electricity generation control unit 82 identifies a position of the rotor 51 of the multi-phase brushless motor 50 based on a change of an electrical signal that is outputted from the rotor position detection device 53. The starting and electricity generation control unit 82 controls the switching parts 711 to 716 based on the position of the rotor 51. This is how the starting and electricity generation control unit 82 controls rotation of the multi-phase brushless motor 50. The starting and electricity generation control unit 82 performs on/off-operation on the switching parts 711 to 716 not at a prescribed timing but in accordance with a position of the rotor 51 detected by the rotor position detection device 53. That is, the starting and electricity generation control unit 82 performs on/off-operation on the switching parts 711 to 716 under a feedback control based on the position of the rotor 51.

The combustion control unit 83 controls the spark plug 37 and the fuel injection device 62, to control the combustion operation of the engine 30. The combustion control unit 83 controls the spark plug 37 and the fuel injection device 62, to control a rotational force of the engine 30. The combustion control unit 83 controls the spark plug 37 and the fuel injection device 62 in accordance with the degree of opening of a throttle valve SV.

As shown in FIG. 4, the control device 80 is composed of a computer including a central processing unit 80a and a storage device 80b. The central processing unit 80a executes arithmetic processing based on a control program. The storage device 80b stores data relating to programs and arithmetic operations.

The combustion control unit 83 and the starting and electricity generation control unit 82 including the driving control unit 821 and the electricity generation control unit 822 are implemented by the central processing unit 80a as well as the control program that is stored in the storage device 80b and is executable by the central processing unit 80a. Thus, operations performed respectively by the combustion control unit 83 and the starting and electricity generation control unit 82 including the driving control unit 821 and the electricity generation control unit 822 can be considered as operations performed by the control device 80. The starting and electricity generation control unit 82 and the combustion control unit 83 may be, for example, either configured as separate devices placed at a distance from each other, or integrated as a single device.

The battery 18 is charged with electricity generated by the multi-phase brushless motor 50. In response to a driver's manipulation on the main switch MS, the main switch MS switches from one to the other of supplying electricity to the control device 80 and stopping the supply of electricity to the control device 80. The engine start switch 124 is manipulated by the driver of the straddled vehicle 1 at a time of starting the engine 30.

### [Variations]

In one of other variations, the low-viscosity oil OL may not be supplied to the multi-phase brushless motor 50. In this case, the crank case 31 is provided with a cooling air inlet and a cooling air outlet for the multi-phase brushless motor 50. The rotor 51 of the multi-phase brushless motor is provided with a fan or a fin that produces an air stream for cooling, the air stream flowing from the cooling air inlet toward the cooling air outlet. The engine 30 may be a parallel multi-cylinder engine or a V type multi-cylinder engine.

### Reference Signs List

- 1: straddled vehicle
- 10: vehicle body
- 11: frame
- 12: front fork
- 13: rear arm
- 14: front wheel
- 15: rear wheel
- 16: fuel tank
- 17: seat
- 18: battery
- 20: engine unit
- 25: radiator
- 30: engine
- 31: crank case
- 32: cylinder
- 34: crankshaft
- 36: piston
- 40: manual transmission
- 41: manual clutch
- 42: input shaft
- 43: output shaft
- 50: multi-phase brushless motor
- 60: intake system
- 65: air cleaner
- 70: motor driver
- 80: control device

## Claims

1. An MT, manual transmission, type straddled vehicle (1) comprising:
a frame (11) including a head pipe (111) and a main frame (112);
a front fork (12) attached to the head pipe (111), the front fork (12) being configured to swivel about the head pipe (111) and to support a front wheel (14) rotatably;
a multi-stage transmission device (40) configured to change a gear ratio in multiple stages;
an engine (30) including a crankshaft (34), a piston (36), a cylinder (32), and a crank case (31), the crankshaft (34) extending in a left-right direction (LR) of the MT type straddled vehicle (1), the cylinder (32) having a cylinder bore in which the piston (36) is reciprocably accommodated, the crank case (31) being connected to the cylinder (32) and storing the crankshaft (34) and the multi-stage transmission device (40), the engine (30) being attached to the frame (11) such that the cylinder (32) is in an upward-downward position;
a starter motor (50) that is a multi-phase brushless motor connected to one end portion of the crankshaft (34), the starter motor (50) being configured to start the engine (30) by rotating the crankshaft (34) and to serve also as a generator that is configured to generate electricity by being driven by the engine (30); and
a motor driver (70) connected to the starter motor (50), and configured to perform switching of a current to be supplied to the starter motor (50),
the front fork (12) including:
a steering shaft (126) supported by and being able to swivel about the head pipe (111);
an upper bracket (127) fixed to the steering shaft (126) at a position higher than the head pipe (111) in an up-down direction of the MT type straddled vehicle (1);
an under bracket (130) fixed to the steering shaft (126) at a position lower than the head pipe (111) in the up-down direction of the MT type straddled vehicle (1);
a right fork (128) fixed to the upper bracket (127) and the under bracket (130), the right fork (128) being disposed farther right than the steering shaft (126) in the left-right direction (LR) of the MT type straddled vehicle (1); and
a left fork (129) fixed to the upper bracket (127) and the under bracket (130), the left fork (129) being disposed farther left than the steering shaft (126) in the left-right direction (LR) of the MT type straddled vehicle (1),
**characterized in that**
the starter motor (50) has a function for assisting an engine output, and
the motor driver (70) is disposed so as to satisfy all of following requirements (A) to (C):
(A) at least a part of the motor driver (70) is positioned so as to overlap a region that is surrounded by an upper edge of the upper bracket (127), a right edge of the right fork (128), a left edge of the left fork (129), and a lower edge of the under bracket (130) while the MT type straddled vehicle (1) is in an upright state, composed in a view perpendicular to both the left-right direction (LR) and a direction parallel to the head pipe (111);
(B) at least a part of the motor driver (70) is positioned farther back than the center of the front wheel (14) in view of the left-right direction (LR) of the MT type straddled vehicle (1); and
(C) at least a part of the motor driver (70) is positioned farther front than the frontmost end of the engine (30) in view of the left-right direction (LR) of the MT type straddled vehicle (1).

2. The MT type straddled vehicle (1) according to claim 1, wherein
the motor driver (70) is disposed so as to satisfy following requirements (D) and (E) in addition to the requirements (A) to (C):
(D) at least a part of the motor driver (70) is positioned higher than the uppermost end of the engine (30) in view of the left-right direction (LR) of the MT type straddled vehicle (1); and
(E) at least a part of the motor driver (70) is positioned lower than the uppermost end of the head pipe (111) in view of the left-right direction (LR) of the MT type straddled vehicle (1).

3. The MT type straddled vehicle (1) according to claim 1 or 2, wherein
the motor driver (70) is disposed so as to satisfy a following requirement (F) in addition to the requirements (A) to (C):
(F) at least a part of the motor driver (70) is positioned farther front than an inclined line in view of the left-right direction (LR) of the MT type straddled vehicle (1), the inclined line being parallel to the head pipe (111) and passing through the uppermost point of the front wheel (14) in view of the left-right direction (LR) of the MT type straddled vehicle (1).

4. The MT type straddled vehicle (1) according to any one of claims 1 to 3, wherein
the motor driver (70) is disposed so as to satisfy a following requirement (G) in addition to the requirements (A) to (C):
(G) at least a part of the motor driver (70) is arranged higher than the lower end of the head pipe (111) in the up-down direction in view of the left-right direction (LR) of the MT type straddled vehicle (1).

5. The MT type straddled vehicle (1) according to any one of claims 1 to 4, further comprising:
a seat (17) where a driver of the MT type straddled vehicle (1) is astride; and
a fuel tank (16) attached to the frame (11), the fuel tank (16) being disposed so as to satisfy all of following requirements (H) to (J) in view of the left-right direction (LR) of the MT type straddled vehicle (1):
(H) at least a part of the fuel tank (16) is positioned farther back than the lowermost end of the head pipe (111);
(I) at least a part of the fuel tank (16) is positioned higher than the uppermost end of the engine (30); and
(J) at least a part of the fuel tank (16) is positioned farther front than the frontmost end of the seat (17).

6. The MT type straddled vehicle (1) according to claim 5, wherein
the fuel tank (16) includes a fuel tank cover (162) that covers the fuel tank (16), the fuel tank cover (162) defining a space in at least a part of a region between the frame (11) and an inner wall of the fuel tank cover (162) in view of the left-right direction (LR) of the MT type straddled vehicle (1), and
the motor driver (70) is disposed so as to satisfy a following requirement (K) in addition to the requirements (A) to (C):
(K) at least a part of the motor driver (70) is disposed between the frame (11) and the inner wall of the fuel tank cover (162) in view of the left-right direction (LR) of the MT type straddled vehicle (1).

7. The MT type straddled vehicle (1) according to any one of claims 1 to 6, further comprising an electric cable (72) connected to the starter motor (50), the electric cable (72) extending along the main frame (112).

8. The MT type straddled vehicle (1) according to claim 7, wherein
the starter motor (50) is provided with a motor lead-out part (55) through which the electric cable (72) connected to the motor driver (70) is led out from the starter motor (50), and the motor lead-out part (55) is arranged such that the electric cable (72) to be led out through the motor lead-out part (55) extends in a direction toward the frame (11) in view of the left-right direction (LR).

9. The MT type straddled vehicle (1) according to claim 8, wherein
the motor lead-out part (55) is arranged such that the electric cable (72) to be led out through the motor lead-out part (55) extends backward.

10. The MT type straddled vehicle (1) according to claim 8 or 9, wherein
the motor lead-out part (55) is arranged such that the electric cable (72) to be led out through the motor lead-out part (55) extends upward.

11. The MT type straddled vehicle (1) according to any one of claims 8 to 10, wherein
the motor driver (70) is provided with a driver lead-out part (75) through which the electric cable (72) connected to the starter motor (50) is led out from the motor driver (70), and the driver lead-out part (75) is arranged such that the electric cable (72) to be led out through the driver lead-out part (75) extends downward.

12. The MT type straddled vehicle (1) according to any one of claims 8 to 11, wherein
the motor lead-out part (55) of the starter motor (50) has a grommet (56) through which the electric cable (72) passes.

13. The MT type straddled vehicle (1) according to claim 11, wherein
the driver lead-out part (75) of the motor driver (70) has a grommet (76) through which the electric cable (72) passes.

14. The MT type straddled vehicle (1) according to any one of claims 8 to 13, wherein
the electric cable (72) is clamped to the frame (11).

15. The MT type straddled vehicle (1) according to any one of claims 8 to 14, wherein
the electric cable (72) has a core made of a conductor, a coating enveloping the core, and a tube covering the coating.

16. The MT type straddled vehicle (1) according to claim 15, wherein
the coating is made of a material with an achromatic color, while the tube is made of a material with a chromatic color.

17. The MT type straddled vehicle (1) according to any one of claims 1 to 16, wherein
the motor driver (70) is disposed so as to satisfy a following requirement (L) in addition to the requirements (A) to (C):
(L) at least a part of the motor driver (70) is positioned lower than the upper edge of the frame (11) in view of the left-right direction (LR) of the MT type straddled vehicle (1).

18. The MT type straddled vehicle (1) according to any one of claims 1 to 17, wherein
the motor driver (70) has a hexahedral shape so as to include two smallest surfaces, two second smallest surfaces, and two largest surfaces, and is arranged with at least a part of one of the largest surfaces opposing the frame (11).

19. The MT type straddled vehicle (1) according to any one of claims 1 to 18, wherein
the starter motor (50) includes a stator (52) and a rotor (51), the stator (52) including a stator core (521) and windings (522) of plural phases, the stator core (521) having plural teeth (523) circumferentially arranged such that the plural teeth (523) and slots (524) locate alternately, the windings (522) being wound on the teeth (523), the rotor (51) including a permanent magnet part (511) with magnetic pole faces (516), the magnetic pole faces (516) being disposed side by side in the circumferential direction so as to oppose the stator (52) with a gap therebetween, the number of the magnetic pole faces (516) being greater than 2/3 of the number of the slots (524).

20. The MT type straddled vehicle (1) according to claim 19, wherein
the crank case (31) is configured such that the inside thereof is lubricated with oil, and
the starter motor (50) includes the rotor (51) without a fan or a fin that produces an air stream for cooling, the starter motor (50) being positioned so as to be in contact with the oil.

21. The MT type straddled vehicle (1) according to claim 19, wherein
the starter motor (50) is configured such that:
a cooling air inlet and a cooling air outlet are provided; and
the rotor (51) is provided with a fan or a fin that produces an air stream for cooling, the air stream flowing from the cooling air inlet toward the cooling air outlet.

22. The MT type straddled vehicle (1) according to any one of claims 19 to 21, wherein
the starter motor (50) is a motor of outer rotor type, and
the rotor (51) has a bottomed cylinder shape connected to the crankshaft (34) at a location between the stator (52) and the cylinder (32) in the left-right direction (LR).

23. The MT type straddled vehicle (1) according to any one of claims 1 to 22, wherein
the starter motor (50) has a rotor position detection device (53) that is a pickup coil.

24. The MT type straddled vehicle (1) according to any one of claims 1 to 23, wherein
the engine (30) is any one of a single cylinder engine, a parallel multi-cylinder engine, or a V type multi-cylinder engine.

## Patentansprüche

1. Spreizsitzfahrzeug vom Schaltgetriebetyp (1), das folgende Merkmale aufweist:
einen Rahmen (11), der ein Kopfrohr (111) und einen Hauptrahmen (112) umfasst; eine Vordergabel (12), die an dem Kopfrohr (111) angebracht ist, wobei die Vordergabel (12) dazu konfiguriert ist, um das Kopfrohr (111) zu schwenken und ein Vorderrad (14) drehbar zu lagern;
eine Mehrstufen-Getriebevorrichtung (40), die dazu konfiguriert ist, ein Übersetzungsverhältnis in mehreren Stufen zu ändern;
einen Motor (30), der eine Kurbelwelle (34), einen Kolben (36), einen Zylinder (32) und ein Kurbelgehäuse (31) umfasst, wobei sich die Kurbelwelle (34) in einer Links-Rechts-Richtung (LR) des Spreizsitzfahrzeugs vom Schaltgetriebetyp (1) erstreckt, wobei der Zylinder (32) eine Zylinderbohrung aufweist, in der der Kolben (36) wechselseitig aufgenommen ist, wobei das Kurbelgehäuse (31) mit dem Zylinder (32) verbunden ist und die Kurbelwelle (34) und die Mehrstufen-Getriebevorrichtung (40) aufnimmt, wobei der Motor (30) derart an dem Rahmen (11) angebracht ist, dass sich der Zylinder (32) in einer Aufwärts-Abwärts-Stellung befindet;
einen Startermotor (50), der ein bürstenloser Mehrphasen-Motor ist, welcher mit einem Endabschnitt der Kurbelwelle (34) verbunden ist, wobei der Startermotor (50) dazu konfiguriert ist, den Motor (30) durch Drehen der Kurbelwelle (34) zu starten und auch als ein Generator zu dienen, der dazu konfiguriert ist, Elektrizität zu erzeugen, indem er durch den Motor (30) angetrieben wird; und
einen Motortreiber (70), der mit dem Startermotor (50) verbunden ist und dazu konfiguriert ist, einen Strom zu schalten, der dem Startermotor (50) zuzuführen ist, wobei die Vordergabel (12) Folgendes umfasst:
eine Lenkwelle (126), die durch das Kopfrohr (111) gelagert ist und um dieses schwenken kann;
eine obere Halterung (127), die an der Lenkwelle (126) an einer Position befestigt ist, die in einer Aufwärts-Abwärts-Richtung des Spreizsitzfahrzeugs vom Schaltgetriebetyp (1) höher liegt als das Kopfrohr (111);
eine untere Halterung (130), die an der Lenkwelle (126) an einer Position befestigt ist, die in der Aufwärts-Abwärts-Richtung des Spreizsitzfahrzeugs vom Schaltgetriebetyp (1) niedriger liegt als das Kopfrohr (111);
eine rechte Gabel (128), die an der oberen Halterung (127) und der unteren Halterung (130) befestigt ist, wobei die rechte Gabel (128) in der Links-Rechts-Richtung (LR) des Spreizsitzfahrzeugs vom Schaltgetriebetyp (1) weiter rechts angeordnet ist als die Lenkwelle (126); und
eine linke Gabel (129), die an der oberen Halterung (127) und der unteren Halterung (130) befestigt ist, wobei die linke Gabel (129) in der Links-Rechts-Richtung (LR) des Spreizsitzfahrzeugs vom Schaltgetriebetyp (1) weiter links angeordnet ist als die Lenkwelle (126),
**dadurch gekennzeichnet, dass**
der Startermotor (50) eine Funktion zum Unterstützen einer Motorleistung aufweist, und
der Motortreiber (70) so angeordnet ist, dass er alle der folgenden Anforderungen (A) bis (C) erfüllt:
(A) zumindest ein Teil des Motortreibers (70) ist dahingehend positioniert, einen Bereich zu überlappen, der von einer oberen Kante der oberen Halterung (127), einer rechten Kante der rechten Gabel (128), einer linken Kante der linken Gabel (129) und einer unteren Kante der unteren Halterung (130) umgeben ist, während sich das Spreizsitzfahrzeug vom Schaltgetriebetyp (1) in einem aufrechten Zustand befindet, zusammengesetzt in einer Ansicht senkrecht zu sowohl der Links-Rechts-Richtung (LR) als auch einer Richtung parallel zu dem Kopfrohr (111);
(B) zumindest ein Teil des Motortreibers (70) ist bei Betrachtung in der Links-Rechts-Richtung (LR) des Spreizsitzfahrzeugs vom Schaltgetriebetyp (1) weiter hinten positioniert als die Mitte des Vorderrads (14); und
(C) zumindest ein Teil des Motortreibers (70) ist bei Betrachtung in der Links-Rechts-Richtung (LR) des Spreizsitzfahrzeugs vom Schaltgetriebetyp (1) weiter vorne positioniert als das vorderste Ende des Motors (30).

2. Spreizsitzfahrzeug vom Schaltgetriebetyp (1) gemäß Anspruch 1, wobei
der Motortreiber (70) dahingehend angeordnet ist, zusätzlich zu den Anforderungen (A) bis (C) die folgenden Anforderungen (D) und (E) zu erfüllen:
(D) zumindest ein Teil des Motortreibers (70) ist bei Betrachtung in der Links-Rechts-Richtung (LR) des Spreizsitzfahrzeugs vom Schaltgetriebetyp (1) höher positioniert als das oberste Ende des Motors (30); und
(E) zumindest ein Teil des Motortreibers (70) ist bei Betrachtung in der Links-Rechts-Richtung (LR) des Spreizsitzfahrzeugs vom Schaltgetriebetyp (1) niedriger positioniert als das oberste Ende des Kopfrohrs (111).

3. Spreizsitzfahrzeug vom Schaltgetriebetyp (1) gemäß Anspruch 1 oder 2, wobei
der Motortreiber (70) dahingehend angeordnet ist, zusätzlich zu den Anforderungen (A) bis (C) eine folgende Anforderung (F) zu erfüllen:
(F) zumindest ein Teil des Motortreibers (70) ist bei Betrachtung in der Links-Rechts-Richtung (LR) des Spreizsitzfahrzeugs vom Schaltgetriebetyp (1) weiter vorne positioniert als eine geneigte Linie, wobei die geneigte Linie bei Betrachtung in der Links-Rechts-Richtung (LR) des Spreizsitzfahrzeugs vom Schaltgetriebetyp (1) parallel zu dem Kopfrohr (111) ist und durch den obersten Punkt des Vorderrads (14) verläuft.

4. Spreizsitzfahrzeug vom Schaltgetriebetyp (1) gemäß einem der Ansprüche 1 bis 3, wobei
der Motortreiber (70) dahingehend angeordnet ist, zusätzlich zu den Anforderungen (A) bis (C) eine folgende Anforderung (G) zu erfüllen:
(G) zumindest ein Teil des Motortreibers (70) ist in der Aufwärts-Abwärts-Richtung bei Betrachtung bei Betrachtung in der Links-Rechts-Richtung (LR) des Spreizsitzfahrzeugs vom Schaltgetriebetyp (1) höher angeordnet als das untere Ende des Kopfrohrs (111).

5. Spreizsitzfahrzeug vom Schaltgetriebetyp (1) gemäß einem der Ansprüche 1 bis 4, das ferner folgende Merkmale aufweist:
einen Sitz (17), auf dem ein Fahrer des Spreizsitzfahrzeugs vom Schaltgetriebetyp (1) rittlings sitzt; und
einen Kraftstofftank (16), der an dem Rahmen (11) angebracht ist, wobei der Kraftstofftank (16) dahingehend angeordnet ist, alle der folgenden Anforderungen (H) bis (J) bei Betrachtung in der Links-Rechts-Richtung (LR) des Spreizsitzfahrzeugs vom Schaltgetriebetyp (1) zu erfüllen:
(H) zumindest ein Teil des Kraftstofftanks (16) ist weiter hinten positioniert als das unterste Ende des Kopfrohrs (111);
(I) zumindest ein Teil des Kraftstofftanks (16) ist höher positioniert als das oberste Ende des Motors (30); und
(J) zumindest ein Teil des Kraftstofftanks (16) ist weiter vorne positioniert als das vorderste Ende des Sitzes (17).

6. Spreizsitzfahrzeug vom Schaltgetriebetyp (1) gemäß Anspruch 5, wobei
der Kraftstofftank (16) eine Kraftstofftankabdeckung (162) umfasst, die den Kraftstofftank (16) abdeckt, wobei die Kraftstofftankabdeckung (162) einen Raum in zumindest einem Teil eines Bereichs zwischen dem Rahmen (11) und einer Innenwand der Kraftstofftankabdeckung (162) bei Betrachtung in der Links-Rechts-Richtung (LR) des Spreizsitzfahrzeugs vom Schaltgetriebetyp (1) definiert, und
der Motortreiber (70) dahingehend angeordnet ist, zusätzlich zu den Anforderungen (A) bis (C) eine folgende Anforderung (K) zu erfüllen:
(K) zumindest ein Teil des Motortreibers (70) ist zwischen dem Rahmen (11) und der Innenwand der Kraftstofftankabdeckung (162) bei Betrachtung in der Links-Rechts-Richtung (LR) des Spreizsitzfahrzeugs vom Schaltgetriebetyp (1) angeordnet.

7. Spreizsitzfahrzeug vom Schaltgetriebetyp (1) gemäß einem der Ansprüche 1 bis 6, das ferner ein elektrisches Kabel (72) aufweist, das mit dem Startermotor (50) verbunden ist, wobei sich das elektrische Kabel (72) entlang des Hauptrahmens (112) erstreckt.

8. Spreizsitzfahrzeug vom Schaltgetriebetyp (1) gemäß Anspruch 7, wobei
der Startermotor (50) mit einem Motorherausführungsteil (55) versehen ist, durch das das elektrische Kabel (72), das mit dem Motortreiber (70) verbunden ist, aus dem Startermotor (50) herausgeführt wird, und das Motorherausführungsteil (55) derart angeordnet ist, dass sich das elektrische Kabel (72), das durch das Motorherausführungsteil (55) herausgeführt werden soll, bei Betrachtung in der Links-Rechts-Richtung (LR) in eine Richtung zu dem Rahmen (11) erstreckt.

9. Spreizsitzfahrzeug vom Schaltgetriebetyp (1) gemäß Anspruch 8, wobei
der Motorherausführungsteil (55) derart angeordnet ist, dass sich das elektrische Kabel (72), das durch den Motorherausführungsteil (55) herausgeführt werden soll, nach hinten erstreckt.

10. Spreizsitzfahrzeug vom Schaltgetriebetyp (1) gemäß Anspruch 8 oder 9, wobei
der Motorherausführungsteil (55) derart angeordnet ist, dass sich das elektrische Kabel (72), das durch den Motorherausführungsteil (55) herausgeführt werden soll, nach oben erstreckt.

11. Spreizsitzfahrzeug vom Schaltgetriebetyp (1) gemäß einem der Ansprüche 8 bis 10, wobei
der Motortreiber (70) mit einem Treiberherausführungsteil (75) versehen ist, durch den das elektrische Kabel (72), das mit dem Startermotor (50) verbunden ist, aus dem Motortreiber (70) herausgeführt wird, und das Treiberherausführungsteil (75) derart angeordnet ist, dass sich das elektrische Kabel (72), das durch das Treiberherausführungsteil (75) herausgeführt werden soll, nach unten erstreckt.

12. Spreizsitzfahrzeug vom Schaltgetriebetyp (1) gemäß einem der Ansprüche 8 bis 11, wobei
das Motorherausführungsteil (55) des Startermotors (50) eine Durchführung (56) aufweist, durch die das elektrische Kabel (72) verläuft.

13. Spreizsitzfahrzeug vom Schaltgetriebetyp (1) gemäß Anspruch 11, wobei
das Treiberherausführungsteil (75) des Motortreibers (70) eine Durchführung (76) aufweist, durch die das elektrische Kabel (72) verläuft.

14. Spreizsitzfahrzeug vom Schaltgetriebetyp (1) gemäß einem der Ansprüche 8 bis 13, wobei
das elektrische Kabel (72) an den Rahmen (11) geklemmt ist.

15. Spreizsitzfahrzeug vom Schaltgetriebetyp (1) gemäß einem der Ansprüche 8 bis 14, wobei
das elektrische Kabel (72) einen Kern, der aus einem Leiter hergestellt ist, eine Beschichtung, die den Kern umhüllt, und ein Rohr, das die Beschichtung bedeckt, aufweist.

16. Spreizsitzfahrzeug vom Schaltgetriebetyp (1) gemäß Anspruch 15, wobei
die Beschichtung aus einem Material mit einer achromatischen Farbe hergestellt ist, während das Rohr aus einem Material mit einer chromatischen Farbe hergestellt ist.

17. Spreizsitzfahrzeug vom Schaltgetriebetyp (1) gemäß einem der Ansprüche 1 bis 16, wobei
der Motortreiber (70) dahingehend angeordnet ist, zusätzlich zu den Anforderungen (A) bis (C) eine folgende Anforderung (L) zu erfüllen:
(L) zumindest ein Teil des Motortreibers (70) ist bei Betrachtung in der Links-Rechts-Richtung (LR) des Spreizsitzfahrzeugs vom Schaltgetriebetyp (1) niedriger positioniert als die obere Kante des Rahmens (11).

18. Spreizsitzfahrzeug vom Schaltgetriebetyp (1) gemäß einem der Ansprüche 1 bis 17, wobei
der Motortreiber (70) eine sechsflächige Form aufweist, um zwei kleinste Flächen, zwei zweitkleinste Flächen und zwei größte Flächen zu umfassen, und mit zumindest einem Teil einer der größten Flächen gegenüber dem Rahmen (11) angeordnet ist.

19. Spreizsitzfahrzeug vom Schaltgetriebetyp (1) gemäß einem der Ansprüche 1 bis 18, wobei
der Startermotor (50) einen Stator (52) und einen Rotor (51) umfasst, wobei der Stator (52) einen Statorkern (521) und Wicklungen (522) mehrerer Phasen umfasst, wobei der Statorkern (521) mehrere Zähne (523) aufweist, die in Umfangsrichtung derart angeordnet sind, dass die mehreren Zähne (523) und Schlitze (524) abwechselnd angeordnet sind, wobei die Wicklungen (522) auf die Zähne (523) gewickelt sind, wobei der Rotor (51) einen Permanentmagnetteil (511) mit Magnetpolflächen (516) umfasst, wobei die Magnetpolflächen (516) Seite an Seite in der Umfangsrichtung angeordnet sind, um dem Stator (52) mit einem Spalt dazwischen gegenüberzuliegen, wobei die Anzahl der Magnetpolflächen (516) größer als 2/3 der Anzahl der Schlitze (524) ist.

20. Spreizsitzfahrzeug vom Schaltgetriebetyp (1) gemäß Anspruch 19, wobei
das Kurbelgehäuse (31) derart konfiguriert ist, dass das Innere davon mit Öl geschmiert ist, und
der Startermotor (50) den Rotor (51) ohne einen Lüfter oder eine Rippe umfasst, die einen Luftstrom zum Kühlen erzeugt, wobei der Startermotor (50) derart positioniert ist, dass er in Kontakt mit dem Öl ist.

21. Spreizsitzfahrzeug vom Schaltgetriebetyp (1) gemäß Anspruch 19, wobei
der Startermotor (50) derart konfiguriert ist, dass:
ein Kühllufteinlass und ein Kühlluftauslass bereitgestellt sind; und
der Rotor (51) mit einem Lüfter oder einer Rippe versehen ist, die einen Luftstrom zum Kühlen erzeugt, wobei der Luftstrom von dem Kühllufteinlass zu dem Kühlluftauslass strömt.

22. Spreizsitzfahrzeug vom Schaltgetriebetyp (1) gemäß einem der Ansprüche 19 bis 21, wobei
der Startermotor (50) ein Motor vom Außenrotortyp ist, und
der Rotor (51) eine Bodenzylinderform aufweist, die mit der Kurbelwelle (34) an einer Stelle zwischen dem Stator (52) und dem Zylinder (32) in der Links-Rechts-Richtung (LR) verbunden ist.

23. Spreizsitzfahrzeug vom Schaltgetriebetyp (1) gemäß einem der Ansprüche 1 bis 22, wobei
der Startermotor (50) eine Rotorpositionserfassungsvorrichtung (53) aufweist, die eine Aufnehmerspule ist.

24. Spreizsitzfahrzeug vom Schaltgetriebetyp (1) gemäß einem der Ansprüche 1 bis 23, wobei
der Motor (30) ein Einzylindermotor, ein paralleler Mehrzylindermotor oder ein Mehrzylindermotor vom V-Typ ist.

## Revendications

1. Véhicule à selle de type à transmission manuelle, MT, (1) comprenant:
un châssis (11) comprenant un tube de tête (111) et un châssis principal (112);
une fourche avant (12) fixée au tube de tête (111), la fourche avant (12) étant configurée pour pivoter autour du tube de tête (111) et pour supporter une roue avant (14) de manière rotative;
un dispositif de transmission à étages multiples (40) configuré pour changer un rapport de vitesse en de multiples étapes;
un moteur (30) comportant un vilebrequin (34), un piston (36), un cylindre (32) et un carter (31), le vilebrequin (34) s'étendant dans une direction gauche-droite (LR) du véhicule à selle de type MT (1), le cylindre (32) présentant un alésage de cylindre dans lequel est logé le piston (36) de manière réciproque, le carter (31) étant connecté au cylindre (32) et stockant le vilebrequin (34) et le dispositif de transmission à étages multiples (40), le moteur (30) étant fixé au châssis (11) de sorte que le cylindre (32) se trouve dans une position vers le haut-vers le bas;
un moteur de démarrage (50) qui est un moteur sans balais polyphasé connecté à une partie d'extrémité du vilebrequin (34), le moteur de démarrage (50) étant configuré pour démarrer le moteur (30) en faisant tourner le vilebrequin (34) et pour servir également de générateur qui est configuré pour générer de l'électricité en étant entraîné par le moteur (30); et
un pilote de moteur (70) connecté au moteur de démarrage (50), et configuré pour effectuer la commutation d'un courant à alimenter vers le moteur de démarrage (50),
la fourche avant (12) comportant:
un arbre de direction (126) supporté par et étant à même de pivoter autour du tube de tête (111);
un support supérieur (127) fixé à l'arbre de direction (126) en une position plus élevée que le tube de tête (111) dans une direction de haut en bas du véhicule à selle de type MT (1);
un support inférieur (130) fixé à l'arbre de direction (126) en une position plus basse que le tube de tête (111) dans la direction de haut en bas du véhicule à selle de type MT (1);
une fourche droite (128) fixée au support supérieur (127) et au support inférieur (130), la fourche droite (128) étant disposée plus à droite que l'arbre de direction (126) dans la direction gauche-droite (LR) du véhicule à selle de type MT (1); et
une fourche gauche (129) fixée au support supérieur (127) et au support inférieur (130), la fourche gauche (129) étant disposée plus à gauche que l'arbre de direction (126) dans la direction gauche-droite (LR) du véhicule à selle de type MT (1),
**caractérisé par le fait que**
le moteur de démarrage (50) présente une fonction destinée à assister une sortie du moteur, et
le pilote de moteur (70) est disposé de manière à remplir toutes les conditions requises suivantes (A) à (C):
(A) au moins une partie du pilote de moteur (70) est positionnée de manière à venir en chevauchement avec une région qui est entourée par un bord supérieur du support supérieur (127), un bord droit de la fourche droite (128), un bord gauche de la fourche gauche (129) et un bord inférieur du support inférieur (130) tandis que le véhicule à selle de type MT (1) se trouve dans un état vertical, composé lorsque vu de manière perpendiculaire tant à la direction gauche-droite (LR) qu'à une direction parallèle au tube de tête (111);
(B) au moins une partie du pilote de moteur (70) est positionnée plus en arrière que le centre de la roue avant (14) lorsque vue dans la direction gauche-droite (LR) du véhicule à selle de type MT (1); et
(C) au moins une partie du pilote de moteur (70) est positionnée plus en avant que l'extrémité la plus en avant du moteur (30) lorsque vue dans la direction gauche-droite (LR) du véhicule à selle de type MT (1).

2. Véhicule à selle de type MT (1) selon la revendication 1, dans lequel
le pilote de moteur (70) est disposé de manière à remplir les conditions requises (D) et (E) suivantes en plus des conditions requises (A) à (C):
(D) au moins une partie du pilote de moteur (70) est positionnée plus haut que l'extrémité supérieure du moteur (30) lorsque vue dans la direction gauche-droite (LR) du véhicule à selle de type MT (1); et
(E) au moins une partie du pilote de moteur (70) est positionnée plus bas que l'extrémité supérieure du tube de tête (111) lorsque vue dans la direction gauche-droite (LR) du véhicule à selle de type MT (1).

3. Véhicule à selle de type MT (1) selon la revendication 1 ou 2, dans lequel
le pilote de moteur (70) est disposé de manière à remplir une condition requise (F) suivante en plus des conditions requises (A) à (C):
(F) au moins une partie du pilote de moteur (70) est positionnée plus en avant qu'une ligne inclinée lorsque vue dans la direction gauche-droite (LR) du véhicule à selle de type MT (1), la ligne inclinée étant parallèle au tube de tête (111) et passant par le point le plus élevé de la roue avant (14) lorsque vue dans la direction gauche-droite (LR) du véhicule à selle de type MT (1).

4. Véhicule à selle de type MT (1) selon l'une quelconque des revendications 1 à 3, dans lequel
le pilote de moteur (70) est disposé de manière à remplir une condition requise (G) suivante en plus des conditions requises (A) à (C):
(G) au moins une partie du pilote de moteur (70) est disposée plus haut que l'extrémité inférieure du tube de tête (111) dans la direction de haut en bas lorsque vue dans la direction gauche-droite (LR) du véhicule à selle de type MT (1).

5. Véhicule à selle de type MT (1) selon l'une quelconque des revendications 1 à 4, comprenant par ailleurs:
un siège (17) sur lequel un conducteur du véhicule à selle de type MT (1) est à califourchon; et
un réservoir de carburant (16) fixé au châssis (11), le réservoir de carburant (16) étant disposé de manière à remplir toutes les conditions requises suivantes (H) à (J) lorsque vu dans la direction gauche-droite (LR) du véhicule à selle de type MT (1):
(H) au moins une partie du réservoir de carburant (16) est positionnée plus en arrière que l'extrémité la plus basse du tube de tête (111);
(I) au moins une partie du réservoir de carburant (16) est positionnée plus haut que l'extrémité la plus haute du moteur (30); et
(J) au moins une partie du réservoir de carburant (16) est positionnée plus en avant que l'extrémité la plus en avant du siège (17).

6. Véhicule à selle de type MT (1) selon la revendication 5, dans lequel
le réservoir de carburant (16) comporte un couvercle de réservoir de carburant (162) qui recouvre le réservoir de carburant (16), le couvercle de réservoir de carburant (162) définissant un espace dans au moins une partie d'une région entre la carrosserie (11) et une paroi intérieure du couvercle de réservoir de carburant (162) lorsque vu dans la direction gauche-droite (LR) du véhicule à selle de type MT (1), et
le pilote de moteur (70) est disposé de manière à remplir une condition requise suivante (K) en plus des conditions requises (A) à (C):
(K) au moins une partie du pilote de moteur (70) est disposée entre la carrosserie (11) et la paroi intérieure du couvercle de réservoir de carburant (162) lorsque vue dans la direction gauche-droite (LR) du véhicule à selle de type MT (1).

7. Véhicule à selle de type MT (1) selon l'une quelconque des revendications 1 à 6, comprenant par ailleurs un câble électrique (72) connecté au moteur de démarrage (50), le câble électrique (72) s'étendant le long du châssis principal (112).

8. Véhicule à selle de type MT (1) selon la revendication 7, dans lequel
le moteur de démarrage (50) est pourvu d'une partie de sortie de moteur (55) à travers laquelle le câble électrique (72) connecté au pilote de moteur (70) est amené hors du moteur de démarrage (50), et la partie de sortie de moteur (55) est disposée de sorte que le câble électrique (72) à faire sortir à travers la partie de sortie de moteur (55) s'étende dans une direction vers le châssis (11) lorsque vu dans la direction gauche-droite (LR).

9. Véhicule à selle de type MT (1) selon la revendication 8, dans lequel
la partie de sortie du moteur (55) est disposée de sorte que le câble électrique (72) à faire sortir à travers la partie de sortie de moteur (55) s'étende vers l'arrière.

10. Véhicule à selle de type MT (1) selon la revendication 8 ou 9, dans lequel
la partie de sortie de moteur (55) est disposée de sorte que le câble électrique (72) à faire sortir à travers la partie de sortie de moteur (55) s'étende vers le haut.

11. Véhicule à selle de type MT (1) selon l'une quelconque des revendications 8 à 10, dans lequel
le pilote de moteur (70) est pourvu d'une partie de sortie de pilote (75) à travers laquelle le câble électrique (72) connecté au moteur de démarrage (50) est sorti hors du pilote de moteur (70), et la partie de sortie de pilote (75) est disposée de sorte que le câble électrique (72) à sortir à travers la partie de sortie de pilote (75) s'étende vers le bas.

12. Véhicule à selle de type MT (1) selon l'une quelconque des revendications 8 à 11, dans lequel
la partie de sortie de moteur (55) du moteur de démarrage (50) présente un passe-câble (56) à travers lequel passe le câble électrique (72).

13. Véhicule à selle de type MT (1) selon la revendication 11, dans lequel
la partie de sortie de pilote (75) du pilote de moteur (70) présente un passe-câble (76) à travers lequel passe le câble électrique (72).

14. Véhicule à selle de type MT (1) selon l'une quelconque des revendications 8 à 13, dans lequel
le câble électrique (72) est attaché au châssis (11).

15. Véhicule à selle de type MT (1) selon l'une quelconque des revendications 8 à 14, dans lequel
le câble électrique (72) présente un noyau constitué d'un conducteur, d'un revêtement enveloppant le noyau et d'un tube recouvrant le revêtement.

16. Véhicule à selle de type MT (1) selon la revendication 15, dans lequel
le revêtement est réalisé en un matériau de couleur achromatique, tandis que le tube est réalisé en un matériau de couleur chromatique.

17. Véhicule à selle de type MT (1) selon l'une quelconque des revendications 1 à 16, dans lequel
le pilote du moteur (70) est disposé de manière à remplir une condition requise (L) suivante en plus des conditions requises (A) à (C):
(L) au moins une partie du pilote de moteur (70) est positionnée plus bas que le bord supérieur du châssis (11) lorsque vue dans la direction gauche-droite (LR) du véhicule à selle de type MT (1).

18. Véhicule à selle de type MT (1) selon l'une quelconque des revendications 1 à 17, dans lequel
le pilote de moteur (70) présente une forme hexaédrique de manière à comporter deux surfaces les plus petites, deux surfaces les plus petites en deuxième ordre et deux surfaces les plus grandes, et est disposé avec au moins une partie de l'une des surfaces les plus grandes opposée au châssis (11).

19. Véhicule à selle de type MT (1) selon l'une quelconque des revendications 1 à 18, dans lequel
le moteur de démarrage (50) comporte un stator (52) et un rotor (51), le stator (52) comportant un noyau de stator (521) et des enroulements (522) de plusieurs phases, le noyau de stator (521) présentant plusieurs dents (523) disposées de manière circonférentielle de sorte que les plusieurs dents (523) et fentes (524) soient situées en alternance, les enroulements (522) étant enroulés sur les dents (523), le rotor (51) comportant une partie d'aimant permanent (511) avec des faces de pôle magnétique (516), les faces de pôle magnétique (516) étant disposées côte à côte dans la direction circonférentielle de manière à être opposées au stator (52) avec un espace entre eux, le nombre de faces de pôle magnétique (516) étant supérieur à 2/3 du nombre de fentes (524).

20. Véhicule à selle de type MT (1) selon la revendication 19, dans lequel
le carter de vilebrequin (31) est configuré de sorte que son intérieur soit lubrifié par de l'huile, et
le moteur de démarrage (50) comporte le rotor (51) sans ventilateur ou ailette qui produit un flux d'air pour le refroidissement, le moteur de démarrage (50) étant positionné de manière à être en contact avec l'huile.

21. Véhicule à selle de type MT (1) selon la revendication 19, dans lequel
le moteur de démarrage (50) est configuré de sorte que:
soient prévues une entrée d'air de refroidissement et une sortie d'air de refroidissement; et
le rotor (51) est pourvu d'un ventilateur ou d'une ailette qui produit un flux d'air pour le refroidissement, le flux d'air circulant de l'entrée d'air de refroidissement vers la sortie d'air de refroidissement.

22. Véhicule à selle de type MT (1) selon l'une quelconque des revendications 19 à 21, dans lequel
le moteur de démarrage (50) est un moteur de type à rotor extérieur, et
le rotor (51) présente une forme de cylindre à fond connecté au vilebrequin (34) à un emplacement entre le stator (52) et le cylindre (32) dans la direction gauche-droite (LR).

23. Véhicule à selle de type MT (1) selon l'une quelconque des revendications 1 à 22, dans lequel
le moteur de démarrage (50) présente un dispositif de détection de position de rotor (53) qui est une bobine de capteur.

24. Véhicule à selle de type MT (1) selon l'une quelconque des revendications 1 à 23, dans lequel
le moteur (30) est l'un quelconque parmi un moteur monocylindre, un moteur à cylindres multiples en parallèle ou un moteur à cylindres multiples de type V.
